Europäisches Patentamt

European Patent Office

Office européen des brevets

(19)

(11) **EP 1 686 500 A2**

(12) **EUROPEAN PATENT APPLICATION**

(43) Date of publication:
**02.08.2006 Bulletin 2006/31**

(51) Int Cl.:
*G06F 17/50* (2006.01)    *F16C 29/00* (2006.01)
*C10M 169/00* (2006.01)    *F16C 19/00* (2006.01)
*G06F 19/00* (2006.01)

(21) Application number: **05013729.8**

(22) Date of filing: **24.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **26.01.2005 JP 2005018916
01.02.2005 JP 2005025437**

(71) Applicant: **DENSO CORPORATION
Kariya-city,
Aichi-pref. 448-8661 (JP)**

(72) Inventors:
• **Shiga, Tsutomu, c/o Denso Corporation
Kariya-city
Aichi-pref., 448-8661 (JP)**
• **Umeda, Atsushi, c/o Denso Corporation
Kariya-city
Aichi-pref., 448-8661 (JP)**
• **Ihata, Kouichi, c/o Denso Corporation
Kariya-city
Aichi-pref., 448-8661 (JP)**

(74) Representative: **Kuhnen & Wacker
Patent- und Rechtsanwaltsbüro
Prinz-Ludwig-Strasse 40A
85354 Freising (DE)**

(54) **Method and apparatus for designing rolling bearing to address brittle flaking**

(57)    There is provided a method and apparatus for designing a rolling bearing provided with components including rolling elements, an outer ring, and an inner ring which come into contact with each other. First, it is determined whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components. Then an estimation is made if brittle flaking resulting from the adiabatic shear bands has a potential for occurrence within the at least one of the components, when it is determined that the adiabatic shear bands have a potential for occurrence.

FIG. 32

EP 1 686 500 A2

## Description

CROSS REFERENCES TO RELATED APPLICATIONS

The present application relates to and incorporates by reference Japanese Patent applications No. 2005-18916 filed on January 26, 2005 and No. 2005-25437 filed on February 1, 2005.

BACKGROUND OF THE INVENTION

(Field of the invention)

The present invention relates to a method of designing rolling parts such as rolling bearings, widely used as a mechanical element, so as to address an issue of brittle flaking and, more particularly, to a design method related to the brittle flaking (also referred to as white-banded flaking) of the rolling bearing for an auxiliary component part to be mounted on an internal combustion engine.

(Description of the Related Art)

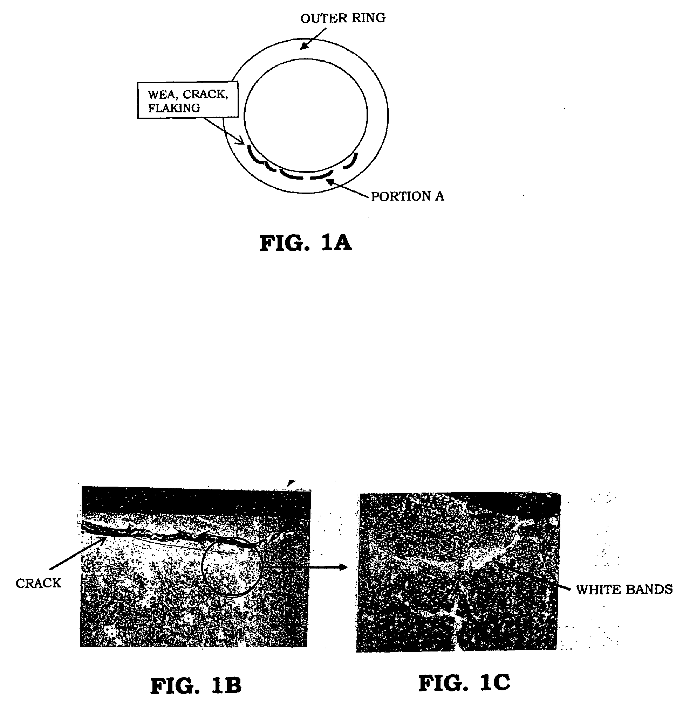

Recently, a rolling bearing of an auxiliary component part, such as an alternator of an automotive internal combustion engine, an air conditioning unit and an idler pulley or the like, has heretofore been used under severe conditions like vibrations and temperatures, eliciting the occurrence of flaking accompanied by changes in structures in a new mode. The flaking occurs in any area of an outer ring, an inner ring and a ball (or roller) and has a feature, different from a fatigue life in a general rolling in the related art, wherein a phenomenon takes place such that once the fatigue takes place, the flaking occurs within a short period (of time approximately 1/100 to 1/1000 times that of the related art). The structure on the relevant site has a feature in which when the structure is etched by nital liquid like fatigue life in the related art, the structure is not visible to be dark (in a so-called DEA: Dark Etching Area) but visible to be white (in a white layer) (in a so-called WEA: White Etching Area) as shown in FIG. 1C. In a bearing industry, although this flaking has been called as "brittle flaking" (which is termed because of an exceptionally short life) and "white-banded flaking" (which is termed based on a feature in its structure) (with the bearing conventionally having a variety of causes, for the structure to be visible in merely a white color, such as butterfly, ferrite and hardened martensite or the like to which the structure does not belong), such flaking will be hereinafter referred to as "brittle flaking". There is a specificity in that unlike conducting a rolling life test causes the bearing to entirely result in fatigue breakdown like the flaking caused by the fatigue encountered in the related art, a mechanism, as to why such flaking takes place, has not been determined yet and if the bearing is damaged depending on the recurrence tests, the flaking occurs within an extremely short period of time whereas under a condition with no occurrence of damage, no brittle flaking takes place. Therefore, attempts have heretofore been undertaken in the related art to address the issue in an expeditious measure with no clear scientific basis and it is a current condition in that no full-fledged measures have been undertaken.

That is, even if a monitor test is conducted on a countermeasure product, which has been effective under a certain recurrence condition A (upon replacing an original product with the countermeasure product), no advantageous effect results in at all. Therefore, if the counter measure product is tested under a new recurrence test condition B, then, no advantageous effect is found in the countermeasure product (sometimes exactly in the contrary effect wherein under the new recurrence test condition, the original product has a longer life than the countermeasure product). Thus, the current status remains under a condition in which the counter measures and the recurrence test conditions are repeatedly altered. Also, to be rambunctious, even if the recurrence test conditions A, B and C are altered and an experimenter has no consciousness of such alteration, result will vary. (For example, although the present inventors have conducted experimental tests on an alternator that is driven by a motor through a belt, even with the same load being applied to the pulley, there are different results even when a pulley ratio of 2 is employed under circumstances where the motor and the alternator have pulleys with diameters of 100mm, 50mm and 150mm, 75mm, respectively. Further, there are different results due to a difference in a belt span even with the pulley having the same diameter, a difference in a momentum of inertia of the pulley and a difference in material of a V-ribbed belt and, hence, there are things that cannot be explained in the thinking of the related art.)

Thus, although the brittle flaking of the rolling bearing can be reproduced on the recurrence test in the same face (structure) as the white-banded structure occurred on the actual machine (automobile), no mechanism is clarified and, hence, different results appear upon presence of conditions under an inconvenient condition. This also results in a vicious circle in which no generation mechanism is clarified. Accordingly, when using the rolling bearing, it appears to be a reality that no study on design can be made in advance and a follow-up design is undertaken. It seems to be a current condition that even if a preliminary study is made, the countermeasure is based on a woefully inadequate scientific basis that seems to be know-how.

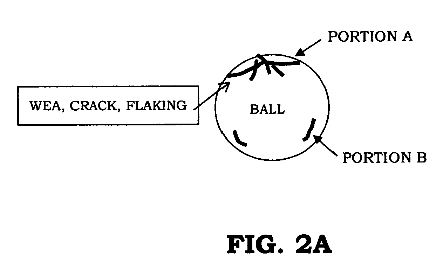

Although this issue has begun to occur in the first place when the V-ribbed belt is adopted in earnest (back in the 1980) (with no occurrence of such an issue in the age of a V-belt), no prospect of specifying the causes has yet emerged and, hence, no counter measures have been established under a current condition. Hereunder, features are described below in conjunction with a macro and micro faces (statuses) on the flaking area taking a ball bearing, for use in the alternator, as an example. A ball bearing of the alternator is made of high carbon chromium bearing steel (SUJ2 with 1%C under JIS standard) and a typical view in which an area, which is subjected to brittle flaking and viewed in a macroscopic property, is shown in FIG. 1A and FIG. 2A. FIGS. 1A to 1C show an outer ring, in which the brittle flaking takes place, and FIGS. 2A to 2D show a ball in which the brittle flaking takes place. As shown in the drawing figures, WEAs (also including crack portions) are distributed in both the ball and the outer ring under respective surfaces in scattered areas. A lopsided outcome is exhibited in that a structure with the bearing of the alternator supplied with grease, composed of extreme pressure additives, for achieving improvement over lubricating ability, the flaking occurs only in the ball and a structure, with no application of the extreme pressure additives, suffers from the flaking only in the outer ring. However, since the structure supplied with the extreme pressure additives has a low incidence of brittle flaking, bearings provided by respective manufacturing companies employ grease with extreme pressure additives and, even in such a case, no success is attained in precluding the occurrence of the flaking on the ball under current status. (In case of an air conditioning unit, a fixed ring includes an inner ring and, hence, the flaking occurs in the inner ring. That is, there is a feature in that the use of grease with no inclusion of the extreme pressure additives causes the brittle flaking to occur on the fixed ring.)

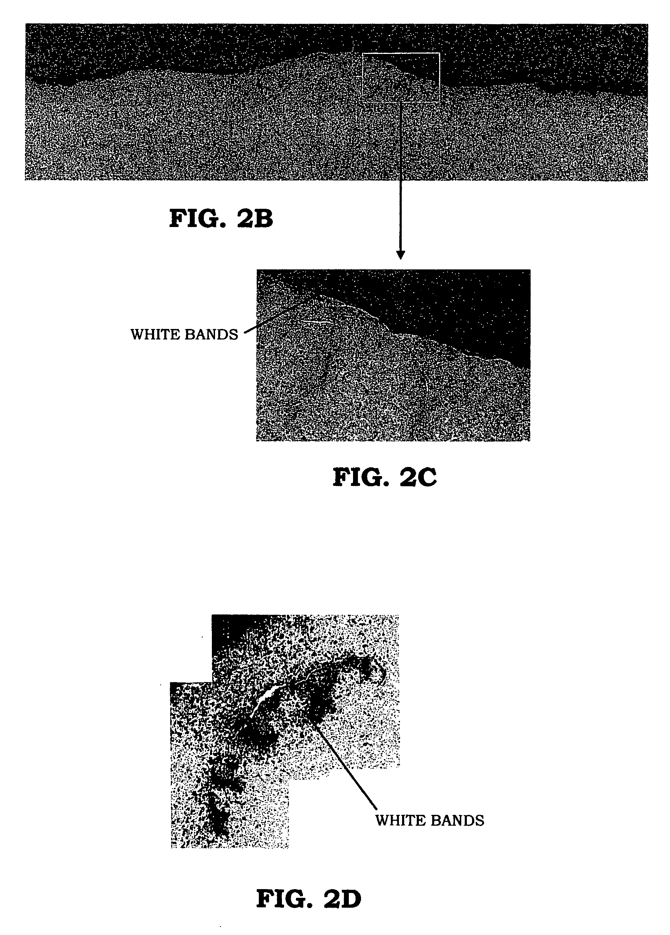

Further, FIGS. 1B and 1C and FIGS. 2B to 2D show photographs of the WEA portion as viewed in a microstructure. FIG. 1B is a view showing the structure of the portion A in FIG. 1A and FIG. 1C is a view showing the photograph, which is enlarged, of a portion surrounded by a circle in FIG. 1B. FIG. 2B is a photograph showing a structure of the portion A in FIG. 2A and FIG. 2C shows a photograph, which is enlarged, of a portion surrounded by a square in FIG. 2B. FIG. 2D is a photograph of a portion B in FIG. 2A.

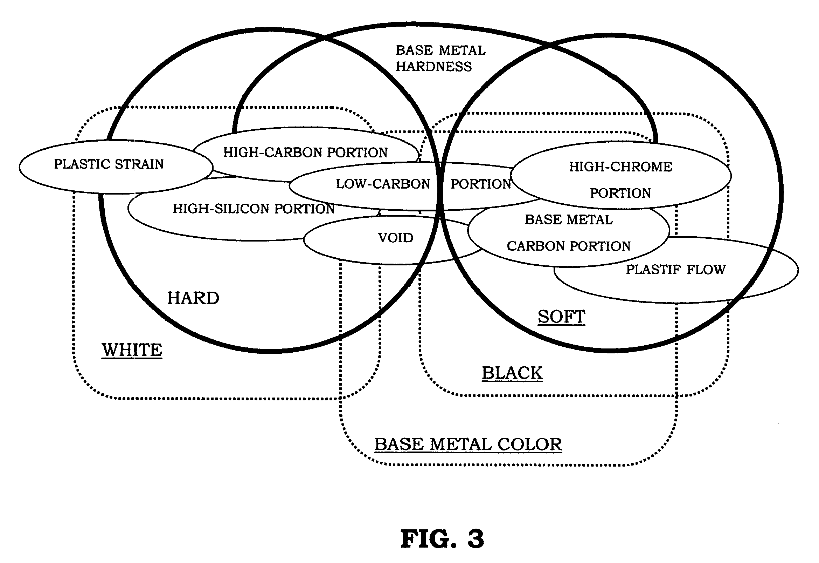

FIGS. 2B and 2C show flaked portions and FIG. 2D shows a non-flaked portion. In any of these structures, white bands are observed in black streaks at scatted positions. Upon observation and analysis of these white bands with SEM and EPMA or the like, white bands (WEA) are present in martensite of a matrix (basis material) as disclosed in a report (international tribology conference 1995) by Masamichi Shibata and associated boundaries are formed with cracks, with the WEA portion having voids, plastic flow and plastic strain that are locally formed. The ball has one area with a carbon concentration higher (1.5%C) than that of the matrix (1%C) and another area with a low carbon concentration (mostly in the vicinity of 0%C) and the WEA portion has a highly hardened area with a hardness of Hv800 to 1400 that are unthinkable in usual heat treatment. FIG. 3 shows a conceptual representation illustrating all of colors, hardness, compositions and structures as features in the micro of such WEA.

Among various mechanisms that have heretofore been proposed for generation of such brittle flaking, these mechanisms may be roughly classified in two theories. One theory is a so-called stress theory in which the brittle flaking takes place under complicated stress conditions caused by vibrations, impacts and bending. The other one is a so-called hydrogen theory in which the flaking occurs due to influence of hydrogen, penetrating from the outside or generated inside the bearing.

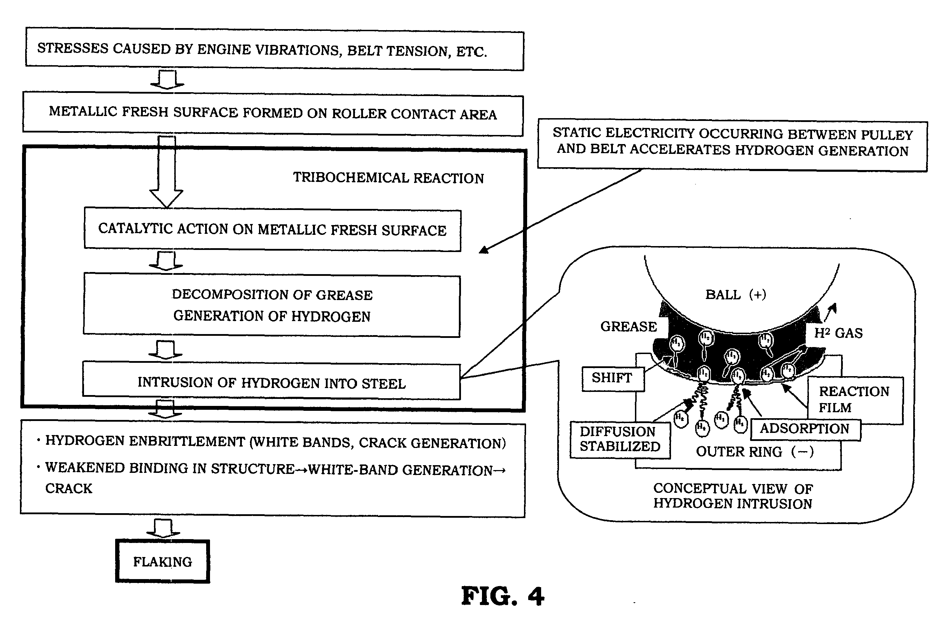

First, in the hydrogen theory, grease (or water entering from the outside) is decomposed due to stress from the automotive vehicle as shown in FIG. 4, generating hydrogen. In the meantime, a positive electrostatic electricity resulting from friction between the belt and pulley is accumulated to provide electrostatic induction effect by which a positive electrostatic charge negatively charges a vicinity of the inner ring contact area and, as a result, the contact area vicinity between the ball and the outer ring is positively charged while the outer ring is negatively charged due to electrostatic induction in a final stage. It is a theory that resulting hydrogen takes positive ions and enters an inside of the outer ring that is negatively charged to cause a change in microstructures to form white bands with the resultant occurrence of flaking in the final stage. There are two theories, i.e., one theory in which material is damaged due to direct hydrogen brittleness with the resultant subsequent formation of the white bands, while the other theory in which the white bands are formed upon the influence of hydrogen after which the material is damaged. (Further, although the ball is also negatively charged at a contact area with the inner rind, the ball is also positively charged at the contact area with the outer ring to cause the positive charges and negative charges to alternately appear on the ball with no capability of drawing hydrogen whereby no flaking takes place.)

This theory has a typical basis on experimental grounds:

   (i) After the tests, hydrogen is detected in steel of a flaked product but hydrogen is not completely detected or relatively less in density in a non-flaked product.

   (ii) A pulley is made of plastic resin, a ball is made of ceramic or a raceway is covered with an insulation film under a condition (so-called electrostatically insulated condition) wherein a positively charged static electricity is not delivered to a contact area (raceway) upon which conducting test (in a way not to promote tribochemical reaction) provides no occurrence of brittle flaking.

From the above basis, the hydrogen theory was considered to be correct argument.

However, such thinking is basically strange. The negatively charged particles accumulated in the outer ring drops into the ground through the body. That is, the outer ring is not negatively charged and, accordingly, no probability occurs for hydrogen with negatively charged ions is attracted to the outer ring. As for another way of thinking, although it is considered that the body of the vehicle is electrically insulated from the ground by means of tires and, so, the outer ring can be negatively charged, this thinking means that it is hardly possible for the ball to encounter the flaking as set forth above and, in actual practice, a probability occurs wherein only the ball is flaked. Thus, it is hard to explain that the outer ring is negatively charged to allow decomposition for hydrogen to develop to cause the brittle flaking on the outer ring (with no difficulty in explaining the flaking of the ball).

Further, suppose hydrogen brittleness independently occur with no aid (enhancement) of static electricity, it completely becomes hard to explain that the brittleness occurred after the use of the V-ribbed belt and that since hydrogen must be absorbed by both of the contact areas, the flakings concentrate only on the outer ring (under circumstances where grease with extreme pressure additives is employed, the flakings concentrate on the ball). Thus, this theory forms an assumption that is completely lack in a scientific basis.

Therefore, attempts have heretofore been partly undertaken to have an idea in that in accordance with this theory, if grease, composed of insulation material, is replaced with grease with electrical conductivity, negatively charged particles accumulated in the ball are enabled to escape to the ground, no brittle flaking takes place. However, it is needless to say that such replacement is a completely meaningless countermeasure (though even if the confirmation is made upon conducting tests, it may be possible that even if lubricating conditions are altered with the resultant change in flaking recurrence conditions, the cause of the brittle flaking is misguided to be a result of the counter measure without knowing a change in the brittle flaking recurrence conditions) .

In addition, as a result of research conducted by the present inventors on a large number of flaked products, no assured basis, in which hydrogen increases, has necessarily been obtained. The present inventors have conducted tests, under a condition where the influence (with the ball being positively charged and the outer ring being negatively charged) are forcibly removed, in a further positive fashion with a view to confirming an authenticity as shown in FIG. 4. That is, although two type of tests have been conducted under one condition where a potential with an opposite polarity is forcibly applied from the outside and under the other condition where both the ball and the outer ring are connected to the ground to bear the same potential, the brittle flakings have occurred on any of these component elements for the same time interval as that in which no counter measure has been undertaken. Thus, the hydrogen theory had a result to be denied in experimental aspects.

Then, what is a reason why the experimental facts like those (i), (ii) set forth above? While on the other hand, the present inventors came to a conclusion as described below. First, as for the fact (i), there are one theory that no hydrogen appears on a non-flaked product and the other theory wherein hydrogen is present but in a less amount. For the ground with no presence of hydrogen at all, the non-flaked product was subjected to the test under the same condition and time as those of the flaked product and after the test was completed, hydrogen must increase to some extent even if the flaking took place but no hydrogen was detected at all. From this fact, it is natural to have thinking that the flaking is not induced by hydrogen but hydrogen is generated as a result of flaking. Therefore, no hydrogen was detected at all in the non-flaked product. Also, it is thought to be better to consider that the ground, in which a less amount of hydrogen was found, results from confusion with mere variations.

Also, the ground (ii) seemed to result from the fact that the experimenter has overlooked a change, unconsciously occurred in the recurrence test condition, as previously pointed out by the present inventors (for instance, the influence of momentum of inertia, resulting from the pulley made of plastic resin in place of iron, was overlooked.) From this, it is concluded that the hydrogen theory is not completely consistent in a reality. Additionally, this theory does not explain the micro and macro faces (see FIGS. 1A to 1C, 2A to 2D and FIG. 3) that are the maximum features of the brittle flaking even if this theory comes from a story in that after hydrogen enters (in primary cause), this influence causes the WEA to occur as a secondary failure. That is, even the primary or secondary failure is hard to answer questions described below.

- Why does the WEA appear in a position under the surface at a certain depth thereof? Hydrogen must be richest on the surface. Nevertheless, why does the macro face appear on a hydrogen lean portion due to influence of hydrogen.
- Does the micro face appear in the presence of hydrogen? Why are there plastic flow or voids?

Further, no explanation is made about the generation of a variety of the white bands (WEA) set forth above. Thus, in addition to the presence of the experimental basis that is grossly questionable, the hydrogen theory is hard to explain the macro and micro faces involving the WEA. In a case where there are white bands, as shown in FIG. 2D, with no occurrence of the flaking, the reason is even more difficult to be explained. Accordingly, a target value and a threshold value cannot be provided in designing.

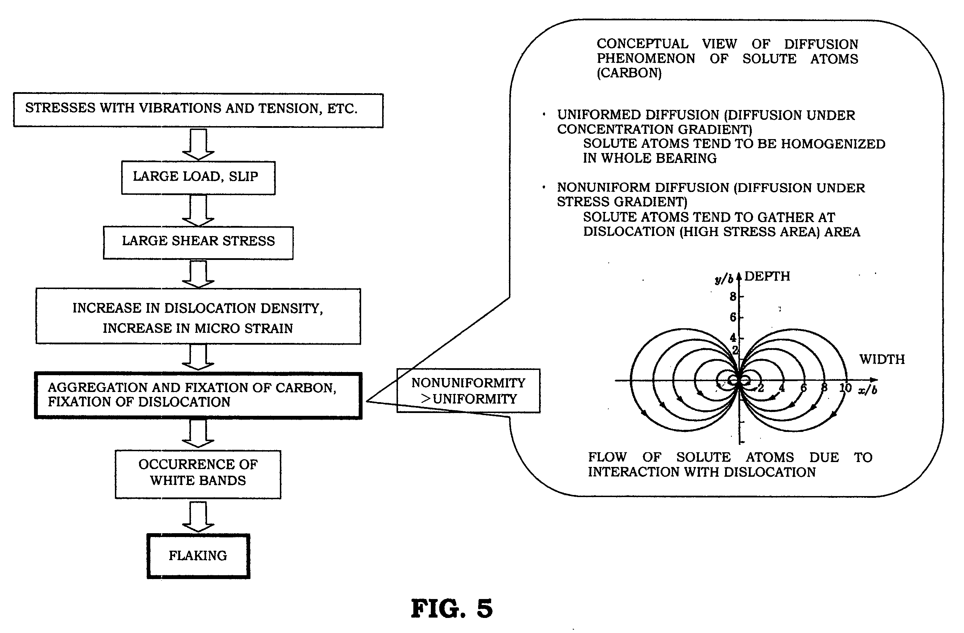

Now, the stress theory is studied. This theory takes a basis on the thinking of the Hertz's stress distribution for use in doctrine of a usual bearing fatigue life and trys to explain the generation of the white bands head-on (to be different from the hydrogen theory). As shown in FIG. 5, a shear stress occurs inside a bearing at the maximum value under a surface in contact (Hertz contact) between the ball and a raceway when applied with load due to stress like engine vibration and, as a result, a dislocation density at such a position increases to cause solute atoms (carbon) inside the matrix to gather, thereby forming carbide into white band structures. Thereafter, this portion encounters cracks due to a difference in the white bands and the matrix structure to result in the flaking. To explain more in detail, there is a diffusion (so-called uniform diffusion wherein as temperatures increases, a diffusion coefficient increases and is enhanced) phenomenon that occurs under a concentration gradient to apply a force, by which the solute atoms are uniformed in side the matrix, which acts against the diffusion (non-uniformed diffusion) phenomenon under a so-called stress gradient wherein the solute atoms gather at one location. This represents that an effect of non-uniformed diffusion overcomes (an effect of the stress overcomes an effect of the temperature) as a result of tug of war between the uniform diffusion and the non-uniformed diffusion whereby the solute atoms collectively gather at the maximum stress portion inside the bearing under the Hertz's contact surface to be formed into carbide (white bands). This is given by

$$\frac{\partial c}{\partial t} = D\nabla^2 c + D\nabla^2 \frac{cV}{kT} \qquad \cdots (10)$$

where c represents solute concentration, D diffusion coefficient, V dislocation energy, k Boltzmann constant and t time. Here, in Eq. 10, a first term of a right side represents a uniform diffusion term and a second term represents a non-uniform diffusion term. That is, in terms of an aspect,

If effect of uniform diffusion term < effect of non-uniform diffusion term, then, WEA occurs (in brittle flaking), and

if effect of uniform diffusion term > effect of non-uniform diffusion term, then, DEA occurs (in fatigue life).

This stress theory qualitatively takes the form involving the most of WEA faces. That is, suppose the Hertz's contact circle (or ellipsoid) has a radius "a", a repeated shear stress "max" occurs in parallel to the surface at a depth of 0.5a from the surface and, if the white bands occur in such a portion (with WEA appearing in parallel to the surface), there is a macro face as shown in FIG. 1A and 2A. Moreover, this portion has an increased dislocation density to cause the solute atoms to move due to diffusion thereby forming an area rich in C, Cr, Si and a lean portion in opposite position. In addition, it becomes possible to explain that the voids are also able to occur due to a Kirkendall effect. However, it is a convenient theory that although it is hard to explain the occurrence of localized plastic flow and plastic strain, most of the cases can be explained.

However, this theory is hard to explain that although the pressure (so-called Hertz's contact pressure) on the contact area between an inner race and the ball acts on both component elements and the resulting internal stresses are equal to each other, while these components are made of same material, the brittle flaking must occur in the inner ring and the ball at substantially the same rate but the inner ring is not damaged whereas the flaking has occurred only in the ball (likewise, it is hard to explain that the flaking occurs only in the outer ring with the use of grease with no inclusion of additives). Additionally, when calculating with a numeric value as a result of actual experiments, no matching is obtained in a quantitative sense. That is, making back calculation a dynamic shear stress $\tau o$ (stress acting in a direction parallel to a surface

on which the maximum repeated stress is applied) and a bearing load based on a Hertz's elastic theory gives, in case of a bearing (with an outer diameter in a range from 35 to 52mm) for use in a usual alternator:

$\tau_o$ = 400 to 1100MPa W = 1500 to 14000N in flaking in the outer ring; and

$\tau_o$ = 800 to 2300MPa W = 2800 to 180000N in flaking in the ball.

This load W takes a large value 3 to 70 times that of an actually measured value. The presence of such a huge load exceeds a load in a range that is not obtained by a housing of a body of the alternator (with no abnormality seen in the housing in actual practice). Moreover, for the ball, such a load exceeds a yield limit = 1300MPa of material SUJ2 to a large extent (in some cases with an unbelievable result exceeding a value of shear strength = 2000MPa). That is, the above-described value represents an unrealistic value in that the bearing enters the plastic deformation region or a phase wherein the bearing is completely damaged with no profile of the ball being maintained. Attempting to explain with the stress theory using the Hertz's elastic doctrine results in a conclusion that the above-described value represents a phenomenon exceeding the plastic deformation. In addition, although attempts have heretofore been undertaken to address a discrepancy based on a compound condition associated with the Hertz's stress in consideration of the influence of a residual stress in an internal part of material, taking a compound stress causes the stress to have a further shallow peak (this means that the compound is shallower than that of the Hertz's theory by itself in terms of the same load, but the other side of the coin is that there is a further increase in the load equivalent to a deep position of the WEA in the experimental tests), resulting in the occurrence of further extraordinary shear stress and load. That is, the Hertz's theory is impossible to be quantitatively explained.

Further, when using Eq. 10 in actual design stage, a large number of uncertain and unknown data such as influences of dislocation energy V and temperature V must be incorporated and such a result influences on values of the first and second terms of Eq. 10. In other words, a behavior is determined to be general fatigue life or to be brittle flaking depending on data and erroneous use of data results in a danger of misleading judgment. Stated another way, the presence of breakdown forms determined with uncertain data is convenient for explaing the result of breakdown (in an excuse for saying that the fatigue life occurred because of cursory data such as for instance information in that the first term wins), but such an attempt is inconvenient for predicting the breakdown form in advance. Consequently, this theory is impossible to provide a target value and a threshold value for the design to be made.

As set forth above, since the doctrine for the general fatigue life is already established and the two mechanisms do not meet an actual condition in terms of the brittle flaking regardless of the presence of a possibility in life prediction, a situation remains in a condition under which it is completely hard to understand which stress factor of an actual machine influences in what way. Accordingly, the situation is that of course, the life prediction on design cannot be made nor countermeasure cannot be made. Further, in recent years, although with a view to achieving a small size and lightweight configuration, a belt drive system of a serpentine system, in which a large number of pulleys are driven with a single belt, has been incorporated in an engine, an issue arises with an increase in a tension, resonance in belt and engine vibration and under such situations, stresses applied to the bearing become complex. A situation holds that no countermeasure can be undertaken for such an issue. Despite the bearing forms an important mechanical component part, not only life prediction cannot be made for the brittle flaking of the rolling bearing but also even a mechanism cannot be established.

As mentioned above, despite the brittle flaking has an extremely short life as compared to the usual fatigue life (in an actual alternator, no chance has occurred in the past for the fatigue life to become a problem), a mechanism, which can explain such a phenomenon, is not established and remains under a condition wherein no appropriate countermeasure is undertaken. Since there is no choice, the current status holds in an ineffective way that discrete countermeasures are undertaken for auxiliary devices of the engine, respectively, and confirmations are made by conducting tests on actual machines. Therefore, it is a current condition that the bearing is unnecessarily increased in size or a precision is increased in waste in labor and even such countermeasures are not effective to fully overcome the deficiencies.

SUMMARY OF THE INVENTION

The present invention has been completed with a view to addressing such issues and has an object to provide a method of designing a rolling bearing in a clear, correct and simple mechanism so as to address brittle flaking.

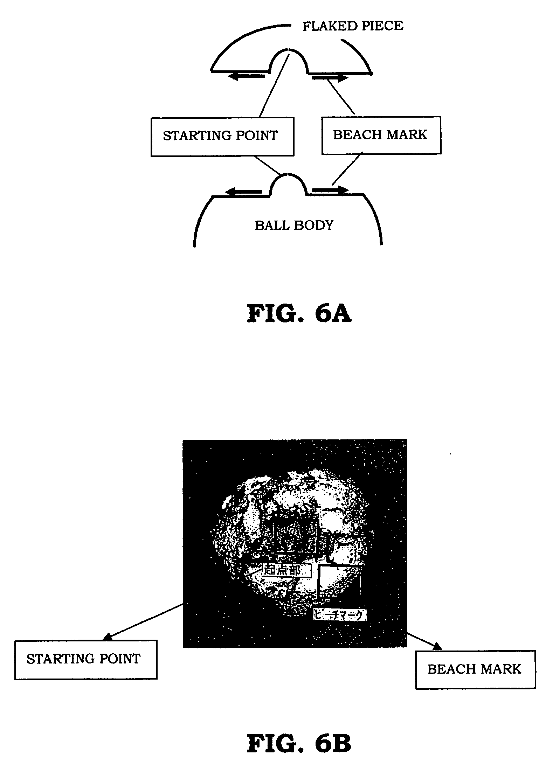

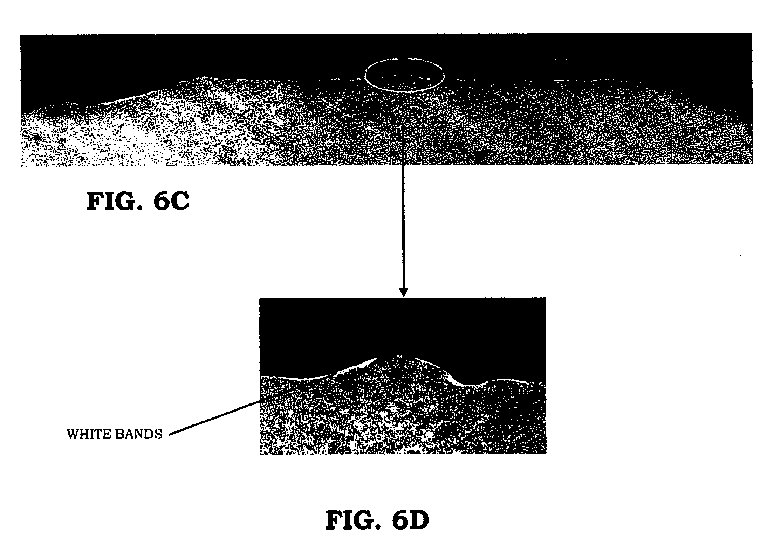

In order to address the above issues, the present inventors have conducted searches on micro and macro faces of the brittle flaking getting back to the starting line after which the reccurrence test results of the past and the stresses in the actual machines are organized for reconsideration. For instance, in case of the brittle flaking of the ball, among a large number of tested results, several bearings, which are relatively less damaged and still formed with flaked segments, respectively, are found. FIG. 6A is a typical view showing an area around a starting point of the flaking; FIG. 6B is a photograph with the flaked segment, shown in FIG. 6A, is viewed from a lower area; FIG. 6C is a photograph of a cross-section of a ball body; and FIG. 6D shows an enlarged photograph of a part surrounded in an ellipsoid shown in FIG. 6C. There is a dent at a center with beach marks around the center in FIG. 6B and, thus, it was found that a starting point of the brittle flaking lies at the center. In contrast, a mountain is present on the ball body (see FIG. 6C) and a mountaintop was found to be the starting point of the flaking. White bands are present in an area straddling a vicinity of the mountaintop and a base thereof.

That is, a crack does not develop in parallel (in a direction $\theta$ in a polar coordinate display) beginning at the interior of the ball into the flaking (in a direction $\tau_o$ at a depth $Z_o$ in the Palmgren doctrine of a bearing...in a so-called dynamic shear direction) but the crack develops along a slope of the mountain, beginning at an area closer (may be a surface) to a surface of the ball, down to the base of the mountain from which the crack runs in a planar direction (chord component...not in the direction $\theta$) with the resultant occurrence of flaking in a final stage. Although the flaked segment has disappeared, several pieces of residual polish surfaces of the ball were found on the starting point of the flaking of the ball body. That is, a so-called surface originating flaking, in which the mountaintop peeks out on the ball surface, was clearly found.

Various other features as listed below taking a bearing of an alternator as an example.

Feature 1: The WEA of the ball occurs such that the crack does not develop in parallel to the surface but proceeds in an arcuate direction starting at the contact surface or a vicinity thereof (Since the damage develops in a major portion and the above-described starting point is mostly invisible, such an expression is appropriate).

Feature 2: In flaking on the outer ring (stationary ring), the WEA straddles an area at an angle of 300° in the same depth. (This means that the white bands are present in a loaded area and a reacting area).

Feature 3: The WEA consists of various structures and components.

Feature 4: Especially, the white bands have extraordinally high hardness.

Feature 5: Plastic flow and plastic strain appear in a localized state.

Feature 6: With a structure utilizing grease containing additives, only flaking takes on the ball and in the absence of the additives, the flaking takes place only in the outer ring.

Feature 7: Even if a bearing load capacity (size) is changed, no improvement is obtained at all in a life (even in case with a diameter of 42mm and in another case with a diameter of 52 mm in a double train structure).

Feature 8: The ease of reccurrence is expressed as: Fixed Rotation < Rapid Acceleration and Deceleration < Vibration < Vibration in Axial Direction (to be mostly subjected to the flaking).

Feature 9: The flaking begins to occur after the belt of the engine is altered from the V-belt to the V-ribbed belt (and, thus, the bearing load approximately doubled from 50Kg to 100Kg).

Feature 10: In the recurrence test based on the vibration, the flaking occurs in the bearing with a load of 150Kg through the use of a belt tension whereas no flaking takes place with the bearing load as high as 400Kg.

Feature 11: In mid-course before the brittle flaking takes in the reccurrence test, the bearing is heated to a temperature of 200°C for eight hours and if the reccurrence test is conducted, the flaking life is postponed.

Thus, when seen from a phenomenomenalism, the above theories have mutually conflicting characteristics. For example, in a way of looking at the bearing load, the features 9 and 10 are opposite to each other. From the features 9, 10 and the feature 8, although a need arises for applying a certain amount of load in order to cause the brittle flaking to take place but the load should not exceeds far beyond the certain load. However, there is a know-how result in the greater the varying load, the more frequent will be for the flaking to take place, it's not like there is an evident ground, it's still more difficult to make scientific explanation. While what is considered for schematically explaining the features 10, 11 is the stress theory (in which the explanation is made in tug-of-war between uniformity and nonuniformity of Eq. 10), these features cannot be quantitatively predicted as set forth above. Further, when attempting to explain a static shear stress $\tau$st (so-called shear stress maximum direction) based on the feature 1, $\tau$st approaches a surface or an area close proximity to the surface when taking a tangential force into consideration. In this event, the stress does not form an axial object to be opposite to the mountain shown in FIG. 6 that is the axial object and the flaking should naturally take place also in the inner ring. Moreover, although the use of grease containing additives have precluded the occurrence of brittle flaking on the outer ring (see feature 6) and explanation is made that the use of grease with no inclusion of additives provides insufficient lubrication to cause friction to o'ccur between the outer ring and the contact portion whereas the use of grease with additives provides an improved lubricating status to minimize friction and ist is minimized to be hard for the flaking to take place, the stress theory is conflicting with $\tau$st from the beginning as set forth above and, so, such an explanation is not right. To begin with, oil component of grease enhances an adequate lubrication (based on EHL theory) with almost no occurrence of friction. As a consequence, a story per se in that grease with no inclusion of additives provides the friction is not right. It is merely a superfluous effort to additionally incorporate additives into grease whose oil content already enhances the lubrication. Thus, the related art theory has an inability of explain the feature 6 at all. That is, the related art theory is hard to simultaneously explain the principal features (in eleven points) mentioned above.

The present inventors have reconsidered with such an inadequacy of the related art stress theory in mind. That is, reconsidering the various facts including the occurrence of the plastic flow and the localization of the plastic strain suggests a hint that this is a topic to be treated in the plastic range exceeding the elastic range. As a result, we came to the conclusion that a strain is better than a stress to be considered and, accordingly, it is preferable to consider with the relationship between the strain and temperatures in mind. There is sort of tug-of-war between plastic strain and temperature rise in place of tug-of-war between the uniformity and ununiformity in Eq. 10. Also, there is a need for such tug-of-war to be related with a temperature increase and a temperature decrease in a local area in order for the strain to be localized (normally, it is impossible for the increase and decrease in the temperature to be locally limited for the purpose of heat transfer). Upon conducting searches on literatures in a variety of field with a keyword "Temperature in Local Area" on a plastic behavior, it has been turned out that this key word is preferably replaced with "Heat Insulation". That is, it comes to our attention that the heat insulation is "Adiabatic Shear Deformation" that has heretofore been studied in an impact processing field for the past 40 years.

According to the literatures in this field, the adiabatic shear deformation is a plastic instable phenomenon that is present under high deformation rates. Especially, white-colored transformation shear bands are observed in high-tension steel and also referred to as white bands that result from a phase in which shear deformation is locally generated to heat a localized area to temperatures beyond a transformation point whereby the localized area is transformed to austenite and further transformed to martensite due to subsequent quenching. Interiors of the bands are hardened to a hardness higher than that realized in normal heat treatment. For this reason, the white bands are also known as "untempered Martensite". Thus, the white bands have various features like those mentioned above and we have come to the conclusion that all of these features correspond to the face of the brittle flaking. Thus, it is judged that the use of application of this theory makes it possible to take measures on a design method and digitalization of threshold values for the brittle flaking of the bearing. (The interiors of the bands are also known as various names such as "Adiabatic Shear Bands".)

Therefore, as one aspect, the present invention provides a method of designing a mechanical element provided with a rolling contact realized between two components one of which is a rolling element and the other of which is either a rolling element or a stationary element, comprising steps of;

determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and

estimating that brittle flaking resulting from the adiabatic shear bands have a potential for occurrence within the at least one of the components, when it is determined that the adiabatic shear bands have a potential for occurrence.

Still, as another aspect, the present invention provides a method of designing a rolling bearing provided with components including rolling elements, an outer ring, and an inner ring which come into contact with each other, comprising steps of:

determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and

estimating that brittle flaking resulting from the adiabatic shear bands have a potential for occurrence within the at least one of the components, when it is determined that the adiabatic shear bands have a potential for occurrence.

The main essence of the present invention according to the above aspects is based on an analysis conducted by the inventors. Though the generation mechanism of the WEA, which causes brittle flaking in rolling bearings serving as rolling contact parts, has been unknown so far, the inventors' analysis shows that such mechanism results from an unstable plastic deformation under high deformation rates, that is, an adiabatic shear deformation. Therefore, it has been known that this WEA is similar to an adiabatic shear band whose mechanism has already been figured out an impact-engineering field. Thanks to this fact, it is comprehensive that suppressing an adiabatic shear deformation from occurring will lead to no brittle flaking. Though being totally impossible to design and estimate bearings conventionally before being placed on the market, it is possible to design and estimate (test) those bearings in advance. There is no necessity for repeating useless estimation and defects can be prevented from occurring on the market.

Preferably, the foregoing determination step includes steps of:

determining whether or not at least one of a condition causing the high deformation rates and the unstable plastic phenomenon is satisfied,

wherein the condition causing the high deformation rates is defined by an equation of

$$\dot{\gamma} < 10^2 / \sec \qquad \cdot \cdot \cdot \ (11) \ ,$$

where $\dot{\gamma}$ a true shear strain rate of true shear strain to be caused within the at least one of the components during a plastic deformation thereof, and

the unstable plastic phenomenon is defined by an equation of

$$\gamma < \gamma_c \qquad \cdot \cdot \cdot \ (12) \ ,$$

where $\dot{\gamma}$ is a true shear strain to be caused within the at least one component and $\gamma_c$ is a critical shear strain depending on a material characteristic of the at least one component, and

estimating that the adiabatic shear bands have no potential for occurrence, thus causing no brittle flaking, provided that the at least one of the condition causing the high deformation rates and the unstable plastic phenomenon is satisfied.

In this configuration, it has practically been made clear that the conditions under which an adiabatic shear deformation will be caused are "a critical shear strain" and "a strain rate" and their ranges during which the adiabatic shear deformation has a potential for occurrence. For this reason, to suppress adiabatic shear bands from occurring, it can be understood that it is sufficient to reduce the true shear strain or strain rate. Defective phenomena resultant from actual stress can therefore be recognized and cured more simply.

Still preferably, the critical shear strain $\gamma_c$ is obtained by calculating, under an adiabatic condition, an equation of

$$\left.\frac{\partial \tau}{\partial \gamma}\right)_{T,\dot{\gamma}} + \left.\frac{\partial \tau}{\partial T}\right)_{\gamma,\dot{\gamma}}\frac{dT}{d\gamma} + \left.\frac{\partial \tau}{\partial \dot{\gamma}}\right)_{T,\gamma}\frac{d\dot{\gamma}}{d\gamma} = 0 \qquad \cdot \cdot \cdot \quad (13) \ ,$$

where $\tau$ is flow stress, $\gamma$ is the true shear strain, $\dot{\gamma}$ is the true shear strain rate, and T is temperature, and assigning a resultant strain value calculated on the equation (13) to the critical shear strain $\gamma_c$ .

In the foregoing configuration, the formula defining the critical shear strain $\gamma_c$ is made clear, so that materials themselves can be made better to prevent the occurrence of adiabatic shear bands, whereby brittle flaking can be avoided from occurring in an easier manner.

It is preferred that the critical shear strain $\gamma_c$ provides a component material characteristic expressed by either an equation of

$$\gamma_c = -\frac{C_v n}{\left.\dfrac{\partial \tau}{\partial T}\right)_{\gamma,\dot{\gamma}}} \qquad \cdot \cdot \cdot \quad (14)$$

or an equation of

$$\gamma_c = -\frac{C_v}{\left.\dfrac{\partial \tau}{\partial T}\right)_{\gamma,\dot{\gamma}}} - \frac{Y'}{k} \qquad \cdot \cdot \cdot \quad (15) \ ,$$

where $C_v$ is a volume specific heat, n is a work hardening exponent in parabolic hardening, Y' is a yield stress of shear, and k is a slope in linear hardening.

This configuration provides a practical value of the critical shear strain $\gamma_c$ using characteristics of materials to be designated based on the test results of various materials. It is thus possible to precisely grasp and estimate degrees showing how easily the adiabatic shear bands are caused. This is highly useful for developing the materials of bearings.

It is also preferred that, on condition that the component material characteristic is expressed by an equation of

$$\tau = \left[A + B\gamma^{n'}\right]\left[1 + C'\ln\left(\frac{\dot{\gamma}}{\dot{\gamma}_0}\right)\right]\frac{T_M - T}{T_M - T_0} \qquad \cdot \cdot \cdot \quad (16) \ ,$$

the critical shear strain $\gamma_c$ is expressed by an equation of

$$\gamma_c = \frac{n'\rho C_P \left(T_M - T_0\right)}{0.9\left(A + B\right)} - \frac{A}{B}\gamma_c^{1-n'} \qquad \cdot \cdot \cdot \quad (17) \ ,$$

where A, B, C' and n' are constants, $T_M$ is a melting point, $T_0$ is an ambient temperature, $\dot{\gamma}_0$ is a strain rate at the ambient temperature, $\rho$ is a mass density, and Cp is a specific heat.

In this case, without conducting material tests at high-strain rates, which are considerably professional and take time, practical values of the critical shear strain $\gamma_c$ can be obtained from ambient-temperature material characteristics listed on a general material manual. It is thus possible to simply grasp and estimate degrees showing how easily the adiabatic shear bands are caused. This is also highly useful for developing the materials of bearings.

Still preferably, the critical shear strain $\gamma_c$ is given as 0.08 serving as a threshold for determining whether or not the adiabatic shear bands have a potential for occurrence.

Since a bearing is made from high-tension steel, the adiabatic shear bands are observed as being white (i.e., also called white bands), making the white layers on a bearing clearer. Furthermore, a practical value of the critical shear strain can be given as 0.08. This is greatly helpful, because there is no need for searching for material data on material manuals.

As an example, the determining step is configured to determine that the adiabatic shear bands have no potential for occurrence, provided that a relative collision velocity v between the rolling element and the outer or inner ring in a radial direction of the rolling bearing is met by an equation of

$$v < 1 \text{m/sec} \qquad \cdots \quad (18).$$

This configuration makes it clear practical factors of stress in cases where the two conditions (strain rate and critical shear strain) resulting in the occurrence of white bands are applied to a ball bearing whose size is available for actual alternators. Thus this is useful in designing ball bearings for alternators most certainly and easily.

Furthermore, by way of example, the rolling bearing is incorporated in an alternator for combustion engines and contains a lubricant of which withstand pressure p is independent of both of viscosity of oil contained in grease and velocity, the lubricant including an additive such as an extreme pressure additive or solid lubricant, and

the determining step is configured to determine that the adiabatic shear bands have no potential for occurrence, provided that the withstand pressure p of the lubricant is met by an equation of

$$p > 7000 \text{MPa} \qquad \cdots \quad (19).$$

Thus this surely provides how to work around ball bearings to be incorporated in an alternator in order to suppress white bands from occurring.

Still, by way of example, the determining step is configured to determine that the adiabatic shear bands have no potential for occurrence, provided that a contact between the rolling element and either the outer ring or the inner ring is maintained.

In this case, factors for avoid, on stress-origin side, the two conditions (strain rate and critical shear strain) resulting in the occurrence of white bands are made more comprehensive and determined to be more safe. Thus this is also useful in checking quality of design of ball bearings most certainly and easily.

As another aspect, the present invention provides a program, of which data is stored in a memory and readable by a computer from the memory, for designing a bearing provided with a rolling contact, the program enabling the computer to perform steps of:

receiving information indicative of dimensions of the bearing, material characteristics of the bearing, and collision conditions of the rolling contact, the material characteristics including values relating to critical shear strain of materials of components composing the rolling contact;
computing physical values indicative of strain to be caused in the bearing using the received information;
making a comparison between the computed physical values and values indicative of the critical shear strain; and
estimating that an adiabatic shear deformation has a potential for occurrence in the bearing.

Accordingly, engineers can use a computer in an easier and more accurate manner during the stage of design of a bearing in order to check whether or not there is a possibility of occurrence of brittle flaking in the bearing, with quick countermeasures taken on the spot.

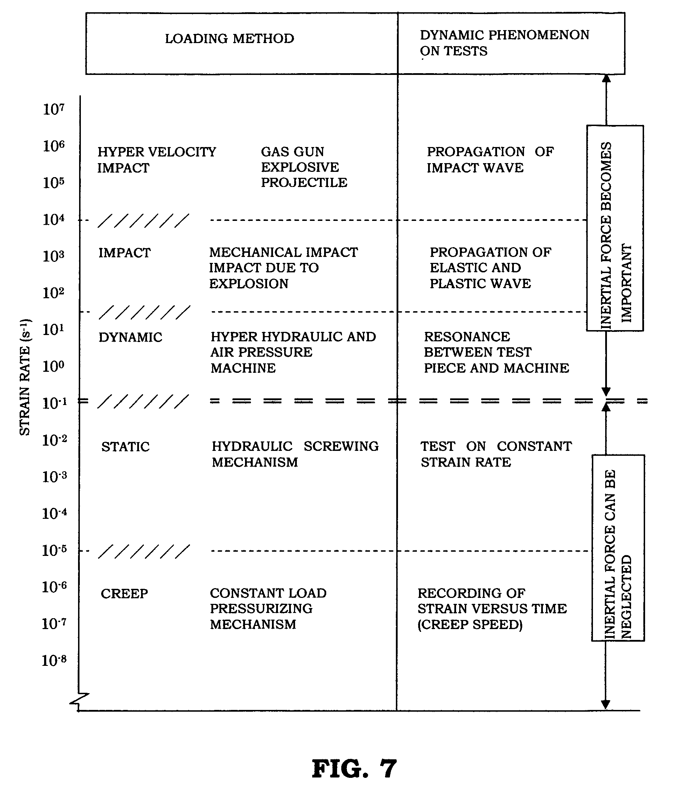

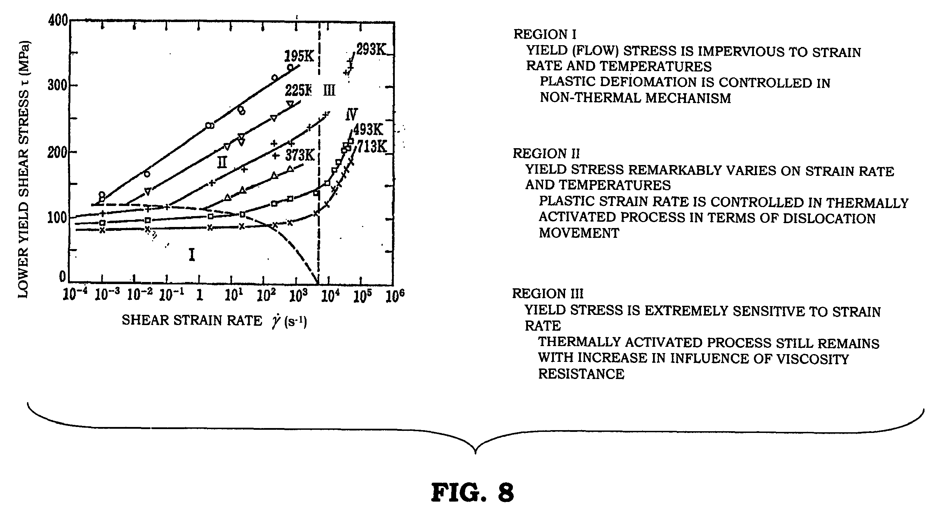

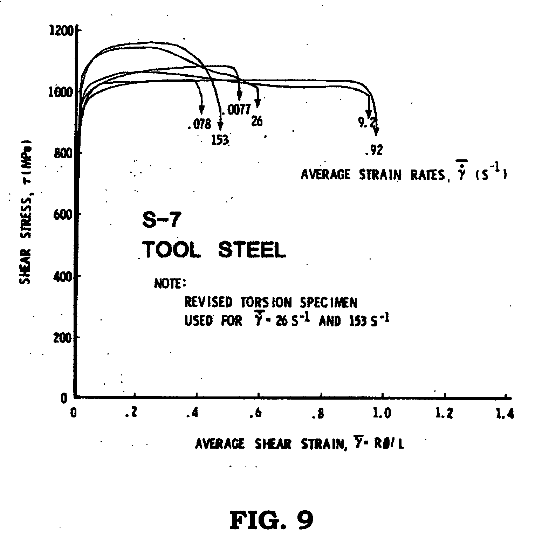

More particularly, description is made of a theory of adiabatic shear deformation disclosed in the literature in an impact-engineering field. Before beginning detailed description, two pieces of characteristic information to be treated in this field are supplemented. First, the relationship of stress-strain in material during an occurrence of high deformation rates takes a value remarkably different from that of the relationship obtained in material tests normally conducted at a low speed (the term "high strain rate" used herein represents a region of impact at a strain rate of $10^2$/sec as shown in FIG. 7). For example, although the relationship among the strain rate, temperatures and yield shear stress is shown in FIG. 8 in terms of an example of soft steel, the present mechanism is involved in a discussion for regions II, III in a sense of an image. Second, a great strain is addressed. It's not an exaggeration to say that a delay in analyzing the present mechanism in the bearing field is used in the absence of the material characteristics related to the great strain, particularly, the great shear strain. FIG. 9 shows one example of data shown in the literature disclosed by Ulric S. Lindholm and Gordon R. Johnson. As apparent from data on tool steel corresponding to material for use in the bearing, it will be appreciated that the maximum shear strain (extension) $\gamma_{max}$ lies at an extremely high level ranging from 0.4 to 1.0.

That is, upon conducting searches on literatures in this field based on consideration that the features, such as those shown in FIGS. 8 and 9, resemble the features (for instance, a tug-of-war between heat and dislocation wherein the brittle flaking is easy to take place as variation in stress increases), we have come to the conclusion that a right theory is the adiabatic shear deformation.

Various literatures (such as a collaborative research conducted by Bedford, Wingrove and Thompson) give detailed description to qualitatively explain features of WEA (all the micro faces shown in FIG. 3) wherein the white bands are generated in a rolling bearing as a result of the occurrence of adiabatic shear deformation in high-tension steel and, hence, detailed description is herein omitted. Further, the face of brittle flaking in the bearing partly includes a face condition appearing when the adiabatic condition is slightly deteriorated (with a certain degree of slow strain rate) to slightly unsatisfy the conditions listed below with the resultant incomplete adiabatic shear deformation and even such a phenomenon is explained in the above literatures (with the white bands being possible to partly appear in a black stripe). Accordingly, detailed description is given below with a focus on a limit in which the white bands occur, that is, a theoretical concept (quantitative part) for determining a threshold, to be useful for achieving a design to address the brittle flaking that would occur in the bearing to which the object of the present invention belongs.

Adiabatic shear deformation bands are observed in high-tension steel as the white bands and such adiabatic shear deformation is regarded as a plastic instable phenomenon appearing under high deformation rates. Explaining this theory based on the literature (with supplement) by Staker, a material characteristic during plastic deformation is given by Eq. 20 with ire presenting shear flow stress, $\gamma$ representing shear strain, shear strain rate and T representing temperatures as expressed below.

$$\tau = f(\gamma, \dot{\gamma}, T) \qquad \cdots (20)$$

The instable plastic flow means that a subsequent increment component ($\Delta\tau$) on hardening that occurs due to "strain ($\gamma$) at a certain point" becomes equal to or greater than a quantity in which softening occurs due to strain as given by Eq. 21 as indicated below.

$$\frac{d\tau}{d\gamma} = 0 \qquad \cdots (21)$$

From Eqs. 20 and 21, a formula 22 representing plastic instability is given as indicated below.

$$0 = \frac{d\tau}{d\gamma} = \frac{\partial\tau}{\partial\gamma}\bigg)_{T,\dot{\gamma}} + \frac{\partial\tau}{\partial\dot{\gamma}}\bigg)_{T,\gamma} \frac{d\dot{\gamma}}{d\gamma} + \frac{\partial\tau}{\partial T}\bigg)_{\gamma,\dot{\gamma}} \frac{dT}{d\gamma} \qquad \cdots (22)$$

On the other hand, a shear work volume w per unit cubic volume and a heat quantity q per unit cubic volume are given by Formulae. 23 and 24 as indicated below.

$$w = \int \tau.d\gamma \qquad \cdots (23)$$

and

$$q = \int C_v dT \qquad \cdots (24),$$

where $C_v$ represents the volume specific heat: provided that the specific heat is multiplied with a specific weight. With steel Cv =3600kPa/˚C, assume that adiabatic deformation takes place, in other word, due to high strain rate shear (with great shear strain rate), deformation energy is entirely used for the heating without causing heat from being leaked to the other area. Therefore, Eq. 23 and Eq. 24 equal in value, thereby obtaining Eq. 25.

$$\frac{dT}{d\gamma} = \frac{\tau}{C_v} \qquad \cdots (25)$$

Accordingly, the plastic instable phenomenon in adiabatic is expressed by Eq. 26 based on Eqs. 22 and 25 as indicated below.

$$0 = \left.\frac{\partial \tau}{\partial \gamma}\right)_{T,\dot{\gamma}} + \left.\frac{\partial \tau}{\partial \dot{\gamma}}\right)_{T,\gamma} \frac{d\dot{\gamma}}{d\gamma} + \left.\frac{\partial \tau}{\partial T}\right)_{\gamma,\dot{\gamma}} \frac{\tau}{C_v} \qquad \cdots (26)$$

Now, assuming that the characteristic of material is composed of parabolic work hardening material, Eq. 27 gives the characteristic formula.

$$\tau = K\gamma^n \dot{\gamma}^m \qquad \cdots (27),$$

where n represents strain work hardening exponent; m represents strain-rate work hardening exponent and K represents a constant.

Partially differentiating Eq. 27 with γ and the shear strain rate gives Eqs. 28 and 29.

$$\frac{\partial \tau}{\partial \gamma} = Kn\gamma^{n-1}\dot{\gamma}^m = n\frac{K\gamma^n \dot{\gamma}^m}{\gamma} = n\frac{\tau}{\gamma} \qquad \cdots (28)$$

$$\frac{\partial \tau}{\partial \dot{\gamma}} = m\frac{\tau}{\dot{\gamma}} \qquad \cdots (29)$$

Substituting Eqs. 28 and 29 in Eq. 26 for the plastic instable phenomenon in adiabatic results in γ that means critical shear strain and using $\gamma_c$ gives Eq. 30.

$$\gamma_c = \frac{n}{-\left.\dfrac{1}{C_v}\dfrac{\partial \tau}{\partial T}\right)_{\gamma,\dot{\gamma}} - \dfrac{m}{\gamma}\dfrac{d\dot{\gamma}}{d\gamma}} \qquad \cdots (30)$$

Now, upon consideration of

$$0 < m < 1 \quad , \quad \dot{\gamma} \geq 10^2 \, \text{sec}^{-1}$$

while neglecting a second term of a denominator gives Eq. 31.

$$\gamma_c = -\frac{C_v n}{\left.\dfrac{\partial \tau}{\partial T}\right)_{\gamma,\dot{\gamma}}} \qquad\qquad \cdots(31)$$

The critical shear strain $\gamma_c$ in Eq. 31 indicates the occurrence of adiabatic shear deformation. In case of high-tension steel, the critical shear strain $\gamma_c$ becomes a condition under which the white bands occur (provided that the material characteristic represents parabolic work hardening).

Similarly, assuming that the material characteristic represents linear work hardening material (Eq. 32), the critical shear strain $\gamma_c$ gives Eq. 33, where Y' represents a shear yield point and k represents a gradient.

$$\tau = Y' + k\gamma \qquad\qquad \cdots(32)$$

$$\gamma_c = -\frac{C_v}{\left.\dfrac{\partial \tau}{\partial T}\right)_{\gamma,\dot{\gamma}}} - \frac{Y'}{k} \qquad\qquad \cdots(33)$$

According to Staker, Eq. 31 seems to be more coincident to the experimental results than Eq. 33.

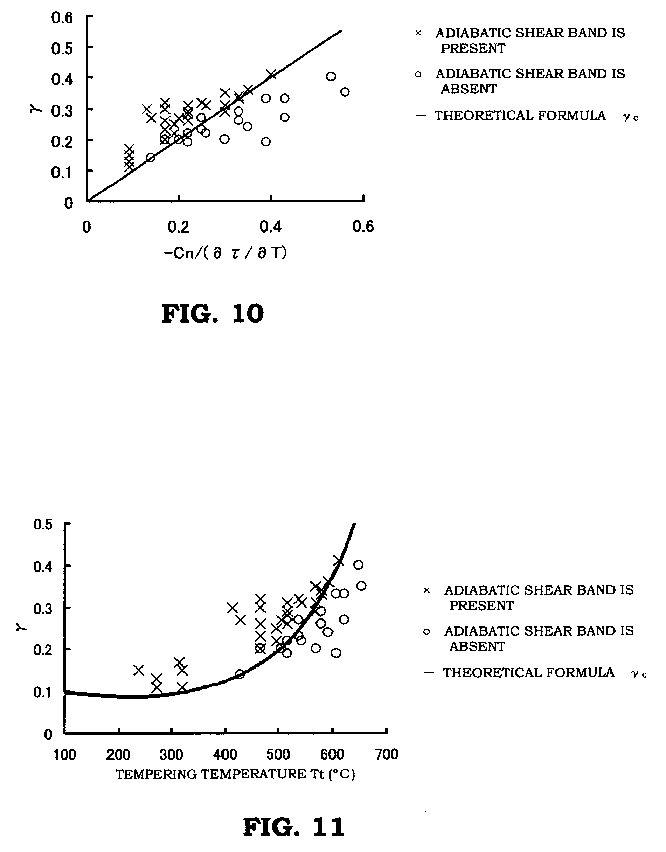

FIG. 10 shows shear strain $\gamma$, resulting from experimentations conducted by changing various heat treatment conducted on steel AIS 14340, which was actually used by him, and results indicative of the absence of or absence of adiabatic shear bands in comparison with a critical shear strain $\gamma_c$ obtained from Eq. 31. As explained in other literatures by him, since conditions under which heat treatment is conducted determined whether the adiabatic shear bands are visible or not visible to be white in color, a probability occurs wherein the adiabatic shear bands are invisible to be white in color and, hence, are not referred to as "white bands" but referred to as "adiabatic shear bands" (with a tendency harder the material, the more trend will be for adiabatic shear bands to colored in white and he did not call the white bands but says a white layer). It seems that Eq. 31 properly predict the experimental results. FIG. 10 indicates a material parameter (on the right side in Eq. 31) plotted on the abscissa and no actual feeling is obtained. Thus, the present inventors prepares a theoretical Eq. upon conversing the theoretical Eq. (Eq. 31) into the relational Eq. for tempering temperature Tt and tensile strength $\sigma_B$ using an approximation Eq. using his experimental data, thereby obtaining Eqs. 34 and 35.

$$\gamma_c = 3\times10^{-14}T_t^5 - 5\times10^{-11}T_t^4 + 3\times10^{-8}T_t^3 - 7\times10^{-6}T_t^2 + 7\times10^{-4}T_t + 7.5\times10^{-2}$$

$$\cdots(34)$$

$$\gamma_c = 4\times10^{-19}\sigma_B^6 - 4\times10^{-15}\sigma_B^5 + 2\times10^{-11}\sigma_B^4 - 4\times10^{-8}\sigma_B^3 + 5\times10^{-5}\sigma_B^2 - 3\times10^{-2}\sigma_B + 10.7$$

$$\cdots(35)$$

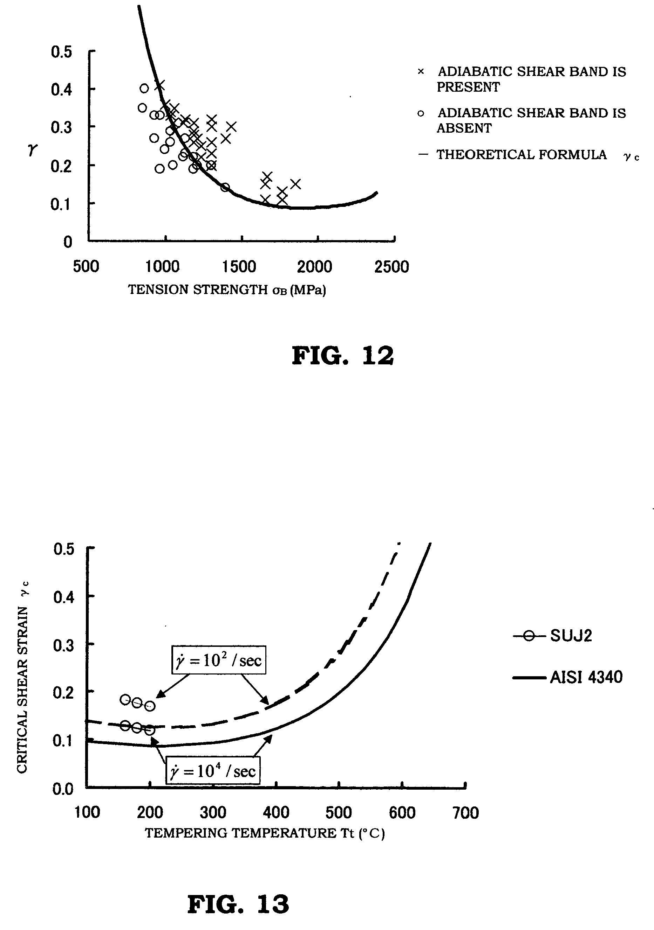

Comparing Eqs. 34 and 35 to the experimental results gives the results shown in FIGS. 11 and 12. In general, there is a tendency in that the lower the tensile strength and the higher the tempering temperature, the harder will be for the adiabatic shear bands to occur (under a condition wherein although there is an area, in which a limit line has a minimal value and partly in opposite, this is because an opposite trend is indicated when the strain processing index n lies at an extremely low tempering temperature). It is easily understood that a bearing, subjected to an extremely high tempering temperature selected by the present inventors to provide a hardness of Hv = 500, had no WEA at all.

While the literature shows the experiments conducted at the strain rate in the vicinity of $10^4$/sec, the present inventors have pressed forward this theory to verify the influence of the strain rate. Eq. 31 has a term of partial differentiation of $\sigma\tau/\sigma T$ in a denominator as a factor related to the strain rate and an influence of this factor has taken into consideration. More particularly, taking a case of steel as an example makes description. In the material characteristics shown in FIG. 8, when the strain rate lies at values of $10^2$/sec and $10^4$/sec, then, values of $\sigma\tau/\sigma T$ are obtained from this drawing figure as expressed below.

At $\dot{\gamma}=10^2$/sec, $\sigma\tau/\sigma T$ = -368 kPa/˚C

At $\dot{\gamma}=10^4$/sec, $\sigma\tau/\sigma T$ = -526 kPa/˚C

where $\sigma\tau/\sigma T$ represents the values when T = 93˚C equal to that in the experiments conducted by Staker.

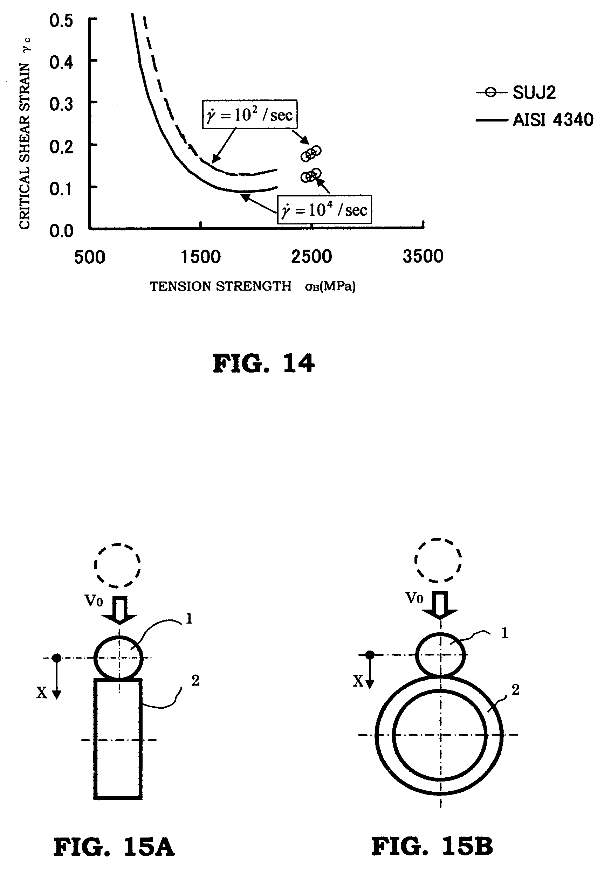

This difference (with a value 1.4 times) reflects that even if C and n are identical, $\gamma_c$ takes a value 1.4 times in the difference. Supposing that this value is similarly obtained in steel AISI14340, calculations were conducted to obtain the relationship between the strain rate and the critical shear strain $\gamma_c$. In addition, another calculation was made even for bearing material SUJ2 (under a condition wherein the characteristics of steel could be organized with the tensile strength and, hence, this relationship is utilized to make calculation supplementing unknown values such as $\sigma\tau/\sigma T$ or the like based on known steel data). These results are indicated in FIGS. 13 and 14. It can be understood that the lower the strain rate, the greater will be the critical shear strain $\gamma_c$ whereby in order for the white bands to be generated, a need arises for the strain $\gamma$, to be applied to the bearing, to be great (that if the strain rate is low, then, it is hard for the strain to exceed the critical shear strain $\gamma_c$ in the absence of the great stress $\gamma$ and no white bands can be generated). According to such understanding, the critical shear strain $\gamma_c$ of SUJ2 lies at a value of approximately 0.1 (when the strain rate lies at $10^4$/sec).

Further, as explained in the literature described above, the presence of a difference between the maximum strain $\gamma_{max}$ and the critical shear strain $\gamma_c$ of material varies destruction patterns. That is, if the strain in the bearing increases, then, the adiabatic shear deformation (white bands) takes place in material with $\gamma\,max> \gamma_c$.

Cracking takes place in material with $\gamma_{max}> \gamma_c$. No adiabatic shear deformation takes place.

In material with $\gamma_{max}\cong \gamma_c$, adiabatic shear deformation takes place and cracking are coexistent.

It is, of course, needless to say that is the strain is low, then, mere plastic strain occurs to the extent associated with the resulting strain with no occurrence of destruction. Further, if the strain rate is in shortage, incomplete adiabatic shear bands take place.

As set forth above, various destruction patterns are able to explain conditions of the micro face (structure) around WEA in an actual unit based on the relationship between the material characteristics and stress. Additionally, as will be appreciated from the analyzed results, it becomes possible to explain the presence of a magnitude of a varying load being more effective than a fixed load (that corresponds to variation in strain), which forms the characteristic resulting from the recurrence test and actual unit set forth above, based on a fact that in order for the white bands to be generated in the bearing, no need arises for a great load to be applied as a stress from the outside but a need arises to have a major premise in which variation in the strain should be shocking (at high strain rate).

While description has been made based on the Staker's literature, this theory needs to have the material characteristics under the impact condition and efforts for actually measuring these material characteristics with a variety of materials are extremely hard and specific in skill (such as like Hopkinson bar tests) to be almost impossible to get basic data under actual situations. In fact, the factors for bearing material SUJ2 were supplemented from those of other materials as set forth above by the present inventors. Therefore, another method, which can make calculation with characteristics resulting from more simplified tests, is described below based on the Lindholm's literature. The theory disclosed in this literature is entirely identical to that disclosed by Staker and, although Eq. 22 is identical, use is made of Eq. 36 that includes all factors as the material characteristics.

$$\tau = \left[A + B\gamma^{n'}\right]\left[1 + C''\ln\left(\frac{\dot{\gamma}}{\dot{\gamma}_0}\right)\right]\frac{T_M - T}{T_M - T_0} \qquad \cdots (36)$$

However, these factors include the terms A, B, C', n' representing a constant, a melting point $T_M$, a shear strain rate at a room temperature, a density $\rho$ and a specific heat $C_P$. Substituting Eq. 36 in Eq. 22 for organization gives Eq. 37 including the critical shear strain $\gamma_c$ as expressed below (with a detail being seen in Lindholm's literature).

$$\gamma_c = \frac{n'\rho C_p (T_M - T_0)}{0.9(A+B)} - \frac{A}{B}\gamma_c^{1-n'} \qquad \cdots (37)$$

Calculating the factors of various materials based on such calculation (including nonferrous metal) reveals that $\gamma_c$ and the critical shear strain, resulting from the experiments, often correspond to each other (with $\gamma_c$ taking a value of 0.16 in steel AMS6418 and tool steel S-7). The value of $\gamma_c$ of SUJ2 has been calculated by the present inventors using this method to obtain a value of 0.085 (wherein A = 1350MPa, B = 392MPa, C' = 0.018 and n' = 0.15). They have conducted a thermal analysis and come to the conclusion that in case of steel, the adiabatic condition is sustained in the presence of the strain rate of $10^2$/sec. Even in the experimental tests, in case of steel AMS6418, a distinctive white etching zone has been observed at the strain rate of $10^2$/sec.

As set forth above, assuming that the generating mechanism for the WEA occurring in the rolling bearing is caused by the adiabatic shear deformation indicative of the plastic instable phenomenon that is present under the high deformation rates, it becomes possible to explain the actual micro face. Further, as a result of theoretical analysis based on such assumption, it became clear that two relationships are required as necessary conditions for the WEA to occur as expressed below.

Strain Rate $\dot{\gamma} > 10^2$ /sec ($\dot{\gamma} > 10^4$/sec would be preferred)

Resulting Strain $\gamma$ > Critical shear strain $\gamma_c$

(In order to prevent the WEA from occurring, either one of the above two relationships or both of the above two relations should not be satisfied.) Upon conversion to SUJ2 that serves as usual bearing material, due to a prediction in which $\gamma_c$ of SUJ2 takes a value of approximately 0.1 both the Staker's method and the Lindholm's method as set forth above, a judgment taking a smaller value in view of safety results in no occurrence of brittle flaking caused by white bands with a value $\gamma_c$ =0.08. To be right, measuring the above-described material characteristics for calculation increases the degree of precision but in actual practice, data mostly amounts to nothing as set forth above and it is conceived that there is a need for determining the threshold value on consideration of this point. Further, it is considered that even the other bearing material such as, for instance, carburized steel other than SUJ2 have the critical shear strain that is substantially equal to that of SUJ2 upon judgment from the amount of carbon. Thus, for designing bearings which are free from brittle flaking, it is required that at least either Eq. 38 or Eq.39 (with a safety factor anticipated in order to adapt a component with no material character and a variety of bearing materials) be satisfied.

$$\dot{\gamma} < 10^2 / \sec \qquad \cdots (38)$$

$$\gamma < 0.08 \qquad \cdots (39)$$

BRIEF DESCRIPTION OF THE DRAWINGS

In the accompanying drawings:

FIG. 1A is a typical view showing an example of an entire structure of an outer ring that is damaged.

FIG. 1B is a photograph showing a damaged area of the outer ring.

FIG. 1C is a photograph showing another damaged area of the outer ring.

FIG. 2A is a typical view showing an example of an entire structure of a ball that is damaged.

FIG. 2B is a photograph showing a damaged area of the ball.

FIG. 2C is a photograph showing another damaged area of the ball.

FIG. 2D is a photograph showing the other damaged area of the ball.

FIG. 3 is a conceptual view showing features in a micro phase of WEA.

FIG. 4 is a view illustrating a mechanism of a hydrogen theory well known in the art.

FIG. 5 is a view illustrating a mechanism of a stress theory well known in the art.

FIG. 6A is a typical view of an example showing areas around a starting point in which flaking takes place in a ball.

FIGS. 6B, 6C and 6D are photographs showing damaged areas.

FIG. 7 is a view showing the relationship between a strain rate and a loading method.

FIG. 8 is a view showing the relationship between a shear strain rate and a shear stress of soft steel.

FIG. 9 is a view showing the relationship between a shear stress and shear strain of tool steel S-7.

FIG. 10 is a view showing the presence of or absence of adiabatic shear bands occurring in steel AIS 14340.

FIG. 11 is a view showing the relationship between the presence of or absence of adiabatic shear bands occurring in steel AIS 14340 and a tempering temperature.

FIG. 12 is a view showing the relationship between the presence of or absence of adiabatic shear bands occurring in steel AIS 14340 and tension strength.

FIG. 13 is a view showing the relationship between a strain rate and a critical shear strain in terms of a tempering temperature.

FIG. 14 is a view showing the relationship between a strain rate and a critical shear strain in terms of tension strength.

FIGS. 15A and 15B are typical views showing a status under which a ball collides against an inner ring.

FIGS. 16A and 16B are enlarged views of collided areas shown in FIGS. 15A and 15B.

FIGS. 17A to 17D are views showing results of studies conducted by Taber to show the relationship between a size of indentation and strain.

FIGS. 18A and 18B are graphs showing strain, strain rate and size of indentation appearing under a case where in a bearing with an outer diameter of 35mm, a ball collides against an inner ring at a speed of 10m/sec.

FIGS. 19A and 19B are graphs showing strain, strain rate and size of indentation appearing under a case where in a bearing with an outer diameter of 35mm, a ball collides against an outer ring at a speed of 10m/sec.

FIGS. 20A and 20B are graphs showing the relationships between strain and strain rate in terms of mass of an object to be collided.

FIGS. 21A and 21B are enlarged views showing colliding surfaces when applied with action of a frictional force.

FIGS. 22A and 22B are enlarged views showing colliding surfaces when applied with action of a frictional force according to a Hertz's elastic deformation theory.

FIG. 23 and FIGS. 23A to 23D are views for illustrating a difference in shear principal stress caused by a difference in directions in which a frictional force is applied in accordance with the elastic deformation theory.

FIGS. 24A and 24B are views showing internally strained conditions of indentations induced by a wedge.

FIGS. 25A and 25B are graphs showing probabilities of variations in average strain and average strain rate in a case where a ball collides against an inner ring in the presence of or absence of friction.

FIGS. 26A and 26B are image views showing how the ball collides against a raceway of the inner ring.

FIGS. 27A and 27B are enlarged views showing crackings and sheared bands generated when a hard ball collides against a flat surface.

FIG. 28 is a view showing a mechanism for brittle flaking to occur in a rolling bearing in a design method according to the present invention.

FIGS. 29A and 29B are views showing variations in critical colliding speeds and strain rates appearing when balls of various bearings collide against an inner ring.

FIGS. 30A and 30B are views showing recurrence test condition, conducted for verifying the mechanism in accordance with the present invention, and related results.

FIG. 31 is a block diagram of a computer which can be used for the design according to the present invention.

FIG. 32 outlines a flowchart exemplifying determination and estimation for judging probability of brittle flaking using the computer shown in FIG. 31.


DETAILED DESCRIPTION OF PREFERRED EMBODIMENT

An embodiment according to the present invention will now be described in connection with the foregoing description about the conventional.

Now, study is undertaken about how the conditions of the formulae 38, 39, set forth above, are satisfied in an actual product.

First, stress with a probability of causing high strain rate, defined in the formula 38, is considered. Since it is known that although varying loads, acting on a bearing of an auxiliary unit of an automobile engine, involve vibrations resulting from explosions in the engine and fluctuations in tension of a belt, the varying loads applied to the bearing remain within critical elasticity even in actual measurements, $\gamma$ takes the maximum value less than 0.003 to satisfy the formula 39. Further, with a six-cylinder engine operating at a speed of 6000rpm, since a frequency marks a value of 300Hz, supposing that the engine is accelerated within a period of 4/1 cycles, an equation is expressed as

$$\dot{\gamma} = \gamma \times 4 \times 300 = 3.6 \ll 10^2 \, / \sec \qquad \cdots (40)$$

and the strain rate satisfies the formula 38. That is, with the bearing exerted with the varying loads resulting from the explosions of the engine, there is no probability wherein adiabatic shear deformation occurs. No wonder appears from a fact that the engine vibrations remain in a dynamic category as shown in FIG. 7.

Next, rough study is made for a possibility in case of an impact as shown in FIG. 7.

Suppose that a ball collides against an inner ring at a speed "v" and an influenced range (length) of resulting strain is indicated as "L", a formula is expressed as

$$\dot{\gamma} = \frac{v}{L} \qquad\qquad \cdots (41).$$

Now, when assumed that the ball has a diameter of 7mm as "L", in order for the strain rate to have a value of $10^2$/sec, the colliding speed lies at v = 0.7m/sec.

Such a speed so far remains in a range that can be adequately achieved at a peripheral velocity (which has a value greater than 15m/sec) in an inner ring of a bearing for a general alternator. (In contrast, in cases where the white bands of the flaked component have a depth and length falling in a value les than 0.5mm and if this dimension is indicated as "L", the strain rate takes a value of $3 \times 10^4$/ sec at the speed of v = 15m/sec.)

That is, if it is assumed that such a phenomenon is an impact, the formula 38 cannot be satisfied with the resultant occurrence of the brittle flaking. Therefore, the present inventors have conducted a search on literatures related to the impact. Although it is a usual practice for an impact phenomenon to be individually analyzed by a finite element method (hereinafter referred to as FEM), such a method has no general versatility and, hence, research work has heretofore been undertaken in the past to find simplified formulae that have a general versatility and an easy-to-use capability in a sense of engineering. Particularly, attempts have heretofore been actively undertaken to conduct experiments and analyses by causing a hard ball to collide against a soft flat surface with a view to simplifying the issue.

Further, research works have heretofore been undertaken in connection with hardness tests (such as Brinell hardness) for the purpose of expressing a value of internal strain in a semi-infinite plate in which an indentation is formed in a semi-spherical shape due to collision of the

ball. Upon studies conducted by the present inventors on whether to apply such research achievements to bearings, a relational expression, which is simple in use and has a general versatility, has been derived. That is, a theoretical concept has been expanded to a complicated condition, based on studies of Hutchings and Taber related to a case wherein a contact area is circular in shape and an indentation is generated only in one flat area (semi-infinite plate), wherein four principal curvatures are related at contact areas like the ball bearing and no difference exists in hardness (of a ball, an outer ring and an inner ring) with indentations being caused in associated contact areas.

That is, let's consider a case wherein a ball 1 is caused to collide against a stationary inner ring 2 at a speed vo in a radial direction of a raceway circle of an inner ring as shown in FIG. 15 to cause a spherical indentation to occur (in plastic deformation) (in case of an alternator, the inner ring rotates but it is assumed that in terms of the collision in the radial direction, the inner ring is fixed due to an inertia of an engine body by means of a rotor inertia of the alternator and a belt). Here, it is supposed that the ball moves in a travel distance "X", based on an original point with a focus on a center of the ball at the moment of collision between the ball and the inner ring, and an impact object has a mass "m". Here, a value of "m" represents a mass of the ball per se when the ball encounters the collision as a single body and when the ball accretes with the outer ring and housing body of the alternator as a unitary body to collide against the inner ring, masses of the collided objects equal a total mass of associated component elements.

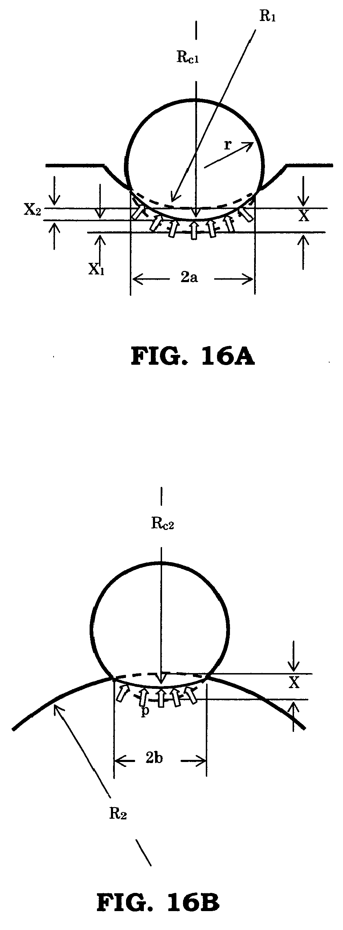

FIG. 16 shows various related dimensions in a midcourse of collision, i.e., the amount $X_1$ of an indentation generated in the ball and the amount $X_2$ of an indentation generated in the inner ring (accordingly a total amount of indentations is represented by X). A symbol r designates a radius of the ball; $R_1$ and $R_2$ designates a radius of curvature of the inner ring and a radius of curvature of a raceway, respectively; a and b designate a long radius and short radius of a contact ellipsoid, respectively; and $R_{c1}$ and $R_{c2}$ designate common radii in the contact areas after the formation of the indentation with $R_{c1}$ representing the common radius on a side phase and $R_{c2}$ representing the common radius on a front side. Since the ball and the inner ring have material hardnesses that are nearly equal to each other, a formula is given below.

$$X_1 = X_2 = \frac{X}{2} \qquad\qquad \cdots (42)$$

Further, from a geometric relationship (provided that rough calculation was carried out with a < r, $R_1$ and b < r, $R_2$), formulae are given as

$$a^2 \cong \frac{2X}{\dfrac{1}{r} - \dfrac{1}{R_1}} \qquad and \qquad b^2 \cong \frac{2X}{\dfrac{1}{r} + \dfrac{1}{R_2}} \qquad\qquad \cdots (43)$$

and

$$R_{C1} = \frac{2rR_1}{R_1 + r} \qquad and \qquad R_{C2} = \frac{2\dot{r}R_2}{R_2 - r} \qquad \cdots(44).$$

(Provided that in case of the outer ring, a negative value is substituted for $R_2$ in the formulae 43 and 44).

From Eqs. 43 and 44, it is concluded that the contact ellipsoid (expressed in terms of a and b) and the contact surface (expressed in terms of $R_{c1}$ and $R_{c2}$) vary depending on the amount of indentations X.

Now, the amount of indentations X varying by the every second is handled. Suppose that an indentation pressure (that is referred to various nominal designations based on contact pressure and plastic yield pressure) is expressed by p, a restoring force of the inner ring is expressed by pnab. Therefore, a dynamic equation of an object with a mass "m" is given below.

$$m\ddot{X} = -p\pi ab \qquad \cdots(45)$$

However, according to Hutchings's literature, the indentation pressure p is expressed below

$$p = c' Y \qquad \cdots(46),$$

where Y represents flow stress (yield stress) and c' represents a constant and takes a value of approximately 3 in case of the indentation pressure.

Now, substituting Eq. 43 for Eq. 45 for fixing gives

$$\ddot{X} = -\frac{2\pi pr}{m}\sqrt{\frac{R_1 R_2}{(R_1 - r)(R_2 + r)}} X \qquad \cdots(47).$$

Since Eq. 47 represents simple harmonic vibration, doing differential equation with respect to conditions ($\ddot{X} = 0$, $\dot{X} = v_0$ when t = 0) as initial conditions gives

$$X = \frac{V_0}{\omega_p}\sin\omega_p t \qquad \cdots(48),$$

provided that

$$\omega_p = -\sqrt{\frac{2\pi pr}{m}\sqrt{\frac{R_1 R_2}{(R_1 - r)(R_2 + r)}}} \qquad \cdots(49).$$

Since so-called loading time tp until the collision terminates is 1/4 cycles, a formula is given as

$$t_p = \frac{\pi}{2\omega_p} \qquad \cdots(50).$$

According to Eqs. 43, 48, it becomes possible to calculate a size and the amount of indentations (a size of a spherical-shaped indentation) of the contact ellipsoid after time t (during a period from 0 to tp) has elapsed upon collision of the ball 1 against the inner ring 2. After $t_p$, the ball bounces back with the resultant alleviation in strain and, hence, a description of an associated status is omitted.

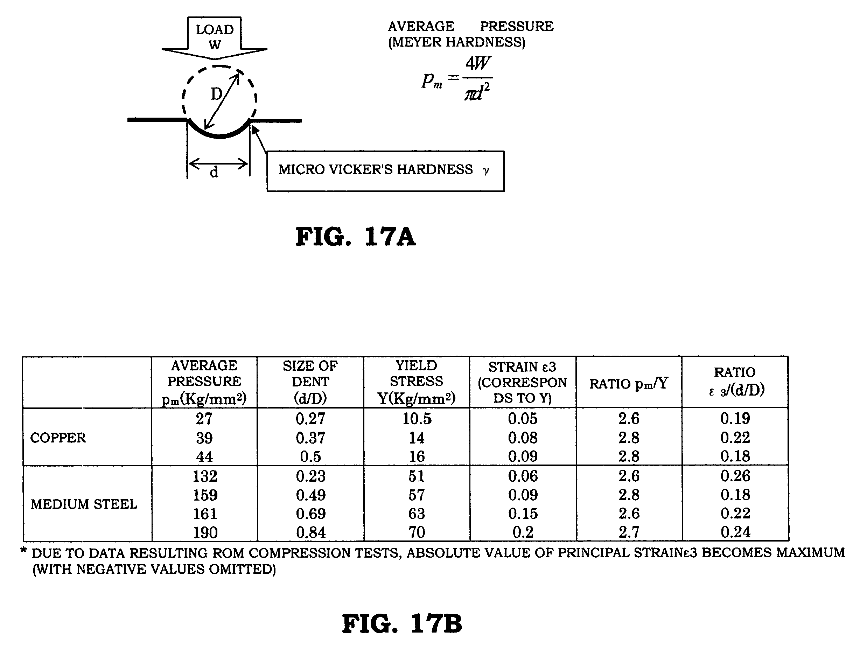

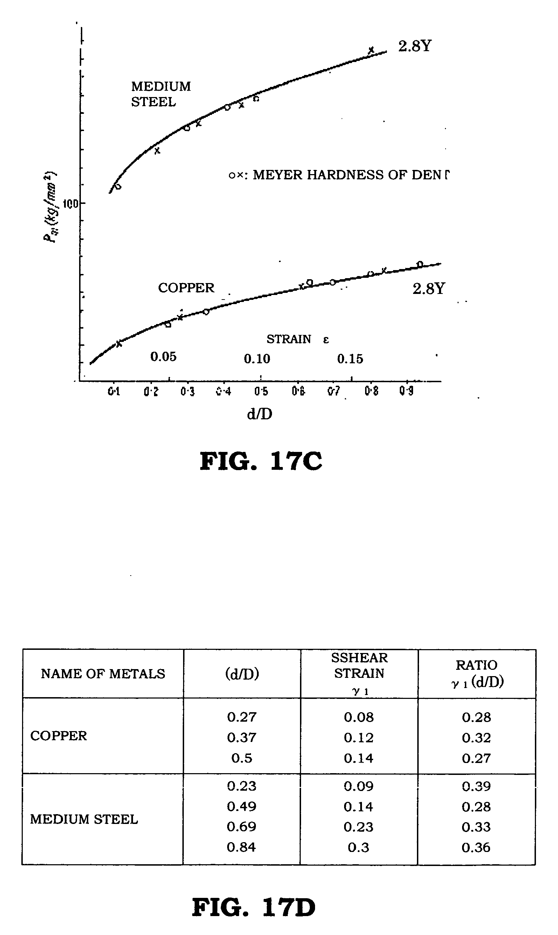

Various researches have heretofore been undertaken for methods of indicating strain in terms of the spherical-shaped indentation mentioned above and studies have been mainly conducted, with a view to simplifying the issues, on the supposition that an indentation vicinity encounters sufficient plastic deformation. The present inventors have considered various factors along with the study conducted by Taber whether to be applied a bearing. First, an outline of the Taber's study is shown in FIG. 17. In his tests, a hard spherical body (with a diameter D) was pressed against bodies made of of copper and medium steel, respectively, under various loads W to form an indentation (for measuring a so-called Meyer hardness) as shown in FIG. 17A, upon which a diameter d of an arc of the resulting indentation and a micro Vicker's hardness Y (using a hardness of a portion at the diameter d in a final stage) of a surface of the resulting indentation was measured while conducting compression tests using the same materials also for measuring compression stress σ - strain ε characteristics. The yield stress Y, used in the measurement conducted in the Meyer's hardness, corresponds to o in compression tests (in other words, both of which may also be referred to as yield stress or flow stress) and, through the intermediation of such factors, the results on the indentation tests are fixed out in terms of a principal strain $\varepsilon_3$. As a result, as shown in FIG. 17B, it is concluded that $p_m/Y$ is nearly equal to 2.8 (in the same conclusion as that of the formula 46) and $\varepsilon_3/(d/D)$ is nearly equal to 2.8 regardless of materials. This results in an experimental proof of the fact that has been theoretically predicted. FIG. 17C shows a graph illustrating variations in experimental values on various sizes based on the above conclusions. That is, the strain ε (with d/D being plotted in terms of the above-described relationship) is plotted on the abscissa and Meyer's hardness is plotted on the ordinate while two curves indicative of values 2.8 times that of Y (equal to σ) of the compression test are shown in comparison. It is clear that both copper and medium steel are aligned in terms of various strains (on work hardening). That is, equations 51 and 52 that can be generally established are given by

$$p_m = 2.8Y \qquad \cdots (51)$$

and

$$\varepsilon = 0.2 \frac{d}{D} \qquad \cdots (52).$$

In respect of these conclusions, other researchers except him have also obtained similar results (for instance, Eq. 51 is identical to the formula 46, set forth above, because p and $p_m$ have the same meanings).

While Taber indicated that an output was indicated by ε for the purpose of finding out a simple relational equation for ε, the present inventors allowed data in his literature to be replaced with a characteristic formula of the shear stress τ - shear strain γ to cause the output to be set to γ. That is, with the compression tests (with no friction) conducted for a column which he has used, the relationship between the principal strains γ and ε is re-expressed as γ = 1.5ε and upon consideration of such an equation, FIG. 17B is rewritten as shown in FIG. 17D. (Originally, under the tests in which the indentations are formed, it is correct in view of mechanics of plasticity that the material is damaged not because of a vertical strain ε but because of a shear strain γ. No object is damaged because of compression stress and compression strain.) According to FIG. 17D, a ratio of $\gamma_1$ / (d / D) is 0.3. (Although not shown in the drawings, similarly, a ratio of pm / k is 5.6 that is equal to that of the formula 51 from the relation in Y = 2K. However, K represents shear yield stress.)

After all, an equation by which the shear strain and the indentation test are correlated is given by

$$\gamma \cong 0.3 \frac{ContactRadius}{BallRadius} \qquad \cdots (53).$$

Since the contact radius of the formula 53 (an equation derived from Taber) corresponds to a, b of the above-described contact ellipsoid and the ball radius corresponds to $R_{c1}$ and $R_{c2}$ of the above-described common radii, the shear strains $\gamma_a$, $\gamma_b$ are given by

$$\gamma_a \cong 0.3 \frac{a}{R_{C1}} = \frac{0.3}{R_{C1}} \sqrt{\frac{2R_1 rV_0}{(R_1 - r)\omega_p} \sin \omega_p t} \qquad \cdots (54)$$

and

$$\gamma_b \cong 0.3 \frac{b}{R_{C2}} = \frac{0.3}{R_{C2}} \sqrt{\frac{2R_2 rV_0}{(R_2 + r)\omega_p} \sin \omega_p t} \qquad \cdots (55).$$

Accordingly, the strain rate is expressed as

$$\dot{\gamma}_a = \frac{d\gamma_a}{dt} = \frac{0.15}{R_{C1}} \sqrt{\frac{2R_1 rV_0 \omega_p}{(R_1 - r)}} \frac{\cos \omega_p t}{\sqrt{\sin \omega_p t}} \qquad \cdots (56)$$

and

$$\dot{\gamma}_b = \frac{d\gamma_b}{dt} = \frac{0.15}{R_{C2}} \sqrt{\frac{2R_2 rV_0 \omega_p}{(R_2 + r)}} \frac{\cos \omega_p t}{\sqrt{\sin \omega_p t}} \qquad \cdots (57).$$

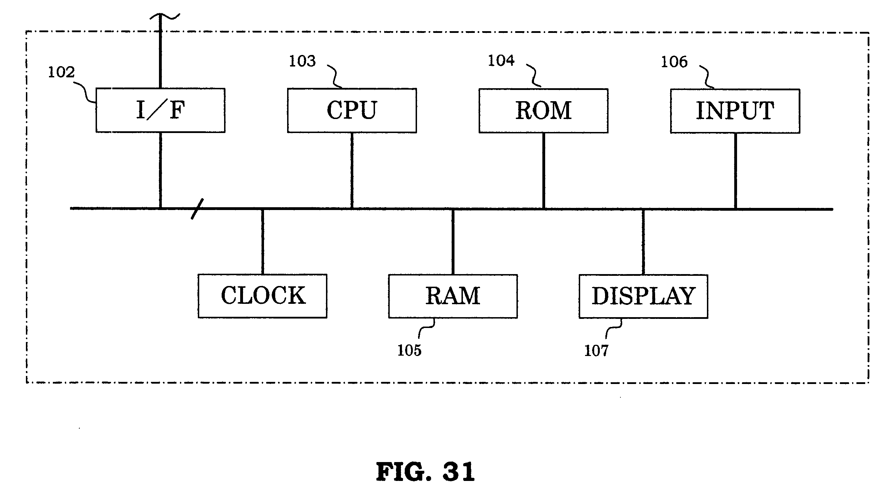

In actual practice, since there are no independent strain and strain rate on a long radius side and a short radium side, supposing that an average between both factors is an actual shear strain $\gamma$ and shear strain rate (of which symbols are to be referred to FIG. 31) gives

$$\gamma = \frac{\gamma_a + \gamma_b}{2} \qquad \cdots (58)$$

and

$$\dot{\gamma} = \frac{\dot{\gamma}_a + \dot{\gamma}_b}{2} \qquad \cdots (59).$$

Substituting a value of the contact radius / ball radius, which is composed of an arithmetic average between a / $R_{c1}$ and b / $R_{c2}$ as frequently executed (for the purpose of simplification) in the contact issues in place of calculating averages of Eqs. 58, 59, gives the same result (as those of Eqs. 58, 59).

The calculation method, set forth above, does not use the Hertz's elastic theory and includes the equation that can be established even in plastic region as apparent from its process. Further, the shear strain $\gamma$ and the shear strain rate, set forth above, form the factors that can be calculated when the contact area vicinities are plastically deformed (with entire areas being plastically deformed) as understood from the supposition and, hence, localized plastic deformation may take place at values less than the values of the shear strain $\gamma$ and the shear strain rate resulting from calculations with the formulae 58, 59.

However, if the calculated values do not exceed conditions (Eqs. 38, 39) by which no adiabatic shear deformation takes place, the calculated values do not exceed the adiabatic shear conditions even in a localized fashion. After all, the occurrence of brittle flaking can be judged by comparing the calculated results of Eqs. 58, 59 to the conditions (Eqs.

38, 39) in which no adiabatic shear takes place. That is, such comparison can be used in judgment of a threshold value. But, since the analysis based on the Taber described above utilizes the method of measuring the Meyer hardness and such a method corresponds to a case represented by the equations (Eqs. 58, 59) under the static conditions wherein almost no frictional force is absent, resulting in a need for attention (influence of friction will be described below).

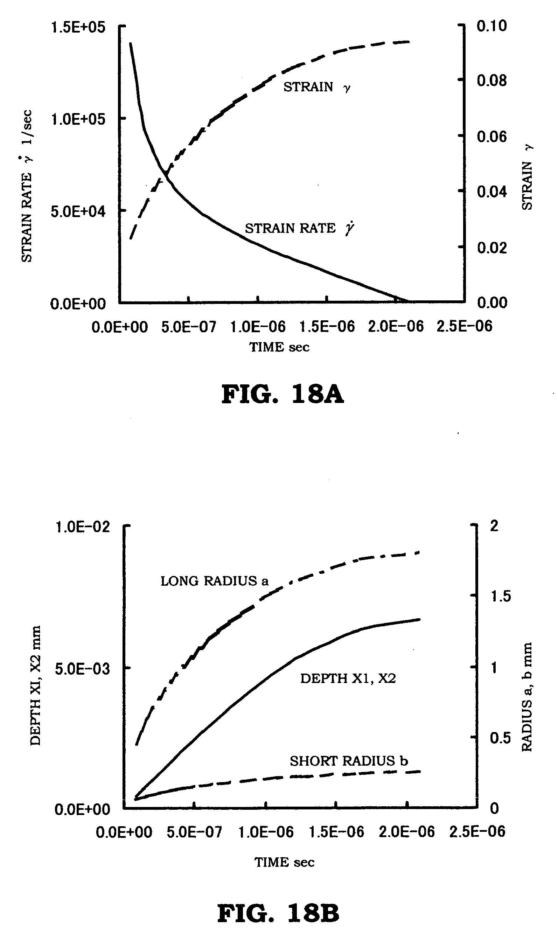

Here, FIGS. 18A and 18B shows calculated results (where $2r = 5.95mm$, $R_1 = 3.05mm$, $R_2 = 9.77mm$ and $Y = 1600MPa$ as an average value during deformation) in cases where a ball bearing, actually used in an alternator and having an outer diameter of 35mm (corresponding to JIS6202), collides against an inner ring (or the inner ring collides against the ball bearing) at a speed vo = 10m/ sec. It is clear from FIG. 18A that in case of such collision, it takes time of $2.2 \times 10^{-6}$sec before the ball comes to a halt and the strain rate is $5 \times 10^4$/sec in average with the strain $\gamma$ reaching a value greater than 0.09. It is understood from FIG. 18B that final indentation depths (of both the ball and inner ring) $X_1$, $X_2$ lie at $7\mu$m and the contact ellipsoid 2a, 2b lie at 0.4mmx3.5mm.

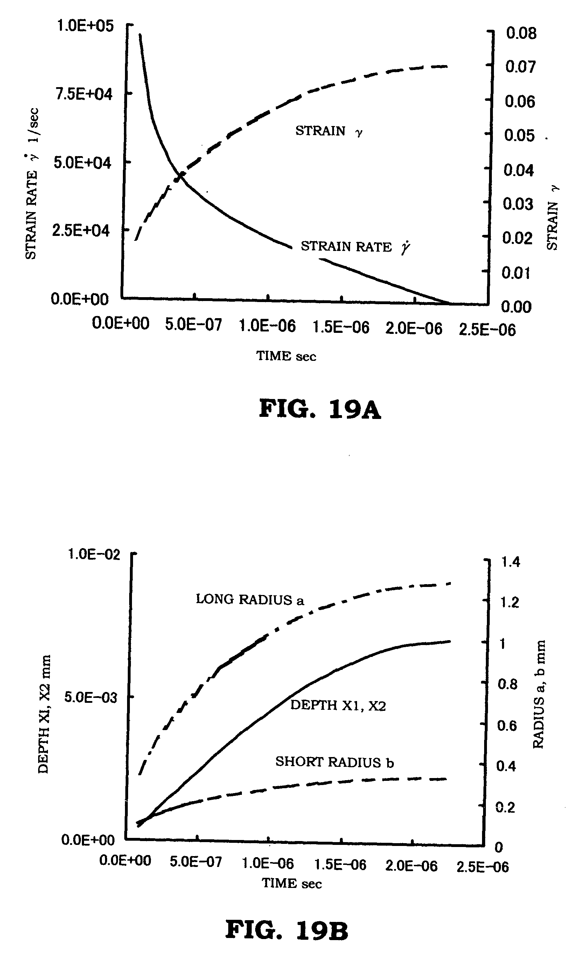

It is thus simply appreciated that the strain $\gamma$ and the strain rate cannot satisfy the formulae 38, 39 and the bearing may have a probability to encounter adiabatic shear deformation if the ball undergoes the collision at a speed of vo = 10m/sec (the reason why the bearing is made to have the possibility comes from the fact that the formula 39 exhibits a judgment value on a safety side as set forth above. FIGS. 19A and 19B show calculated results (where $R_1 = 3.14mm$, $R_2 = 15.73mm$) in a case where the same bearing as that of FIGS. 18A and 18B is used and collides against an outer ring (or the outer ring collides against the ball). It is appreciated that the strain and the strain rate have smaller values than those of the case wherein the ball collides against the inner ring (with $\gamma$ varying from 0.09 to 0.07 in reduction by 20%). That is, assuming that the ball collides against the inner ring or the outer ring at the same speed, the inner ring exceeds the critical shear strain $\gamma_c$ and the critical shear rate before the outer ring exceeds these critical values and the inner ring surely encounters the brittle flaking. In this sense, the same result as that obtained in the related art stress theory based on the Herzt's elastic theory is obtained (that is, when applied with the same load, the inner ring encounters larger stress than that encountered by the outer ring).

However, a conclusive difference occurs between the related art stress theory, wherein load is used as stress, and the present invention wherein the impact speed is used. That is, the load, applied to the inner ring due to loads resulting from the tension of a V-belt and engine vibrations or the like according to a principle of action and reaction, is surely exerted onto the outer ring at an equal magnitude. This results in an increase in stress of the inner ring such that the inner ring encounters the flaking before the outer ring undergoes the flaking. In the meanwhile, with the impact speed vo being applied, it is natural for the inner ring and the outer ring to undergo completely separate values of vo. Since the "impact" means in the first place that a ball bears away from one of or both of the inner ring and the outer ring for some reasons to be brought out of a contact condition (into a so-called free condition) upon which the ball is caused to be brought into contact (into collision) with the associated component part, separate times exists when the ball collides against the outer ring and when the ball collides against the inner ring.

That is, vo is an entirely different value. Accordingly, depending on the value of vo with respect to the inner ring and the outer ring, different magnitude relationships appear in the strain $\gamma$ and the strain rate. Taking the above-described bearing as an example, if the ball collides against the inner ring at an impact speed of vo = 10m/ sec, the outer ring encounters greater strain and strain rate than those of the inner ring if the ball collides against the outer ring at a speed exceeding a value of vo = 15m/sec. Since the ball orbits to encounter a centrifugal force, the ball, entering the free condition, usually jumps out to the outside; that is, the ball jumps out not toward the inner ring but toward the outer ring to collide against the outer ring. Thus, it is usual for a colliding surface (of the outer ring or the ball) with respect to the outer ring to encounter the brittle flaking. That is, no brittle flaking takes place on the inner ring.

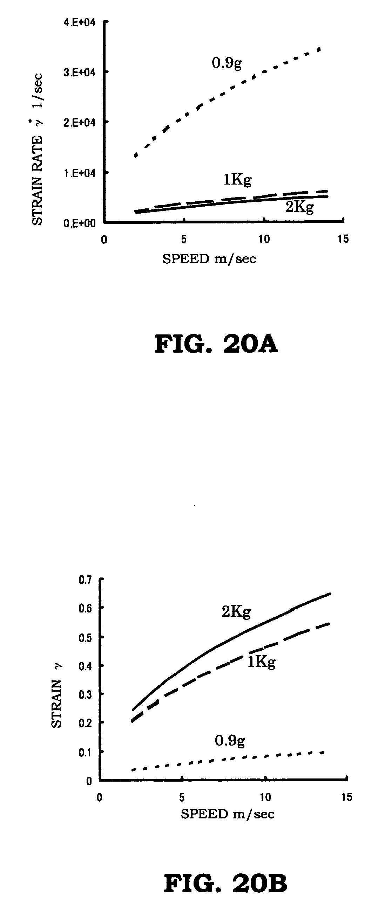

FIGS. 20A and 20B show the relationships between a strain and a strain rate in terms of an impact speed and a mass (under circumstances

where a ball collides against an inner ring under the same conditions as those shown in FIGS. 18A, 18B, FIGS. 19A and 19B while a time for expressing average conditions in $\gamma$ and the strain rate is designated by a time t = tp / 2 that is half of a time interval between a start and an end of the collision). It is understood that in order not to simultaneously satisfy two conditions (the critical shear strain $\gamma_c$ and the critical strain rate (whose symbols are to be referred to FIG. 31) under which no adiabatic shear deformation takes place, a need arises for a mass to be small (at a value of 0.9g in FIG. 20A). That is, this means that the masses of a rotor (of approximately 1Kg) and an alternator (of approximately 2Kg) encounter the collisions but there are probabilities wherein as an element ball (of approximately 0.9g) or a plurality of balls encounter the collisions, the critical shear deformation will take place (the same applies to a case in which the collision is encountered by the ball and the outer ring and a probability occurs with the occurrence of adiabatic shear deformation when the unit ball encounters the collision).

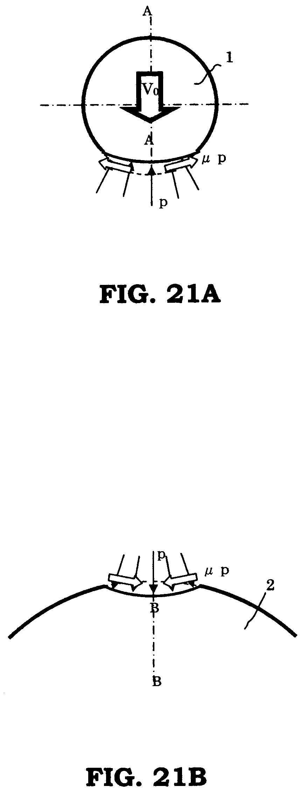

While the foregoing studies have been conducted based on an easy-to-use theoretical calculation under circumstances where it is supposed that no frictional force is present, there is a need for obtaining $\gamma$ in the presence of and in consideration of the frictional force wherein a strain (substantially a principal strain) in a tangential direction does not lie at a value of 0. That is, FIGS. 21A and 21B show the relationship in force in cases where there is a frictional force on the way wherein the ball, shown in FIG. 16B, collides against the inner ring to cause the indentation to be formed.

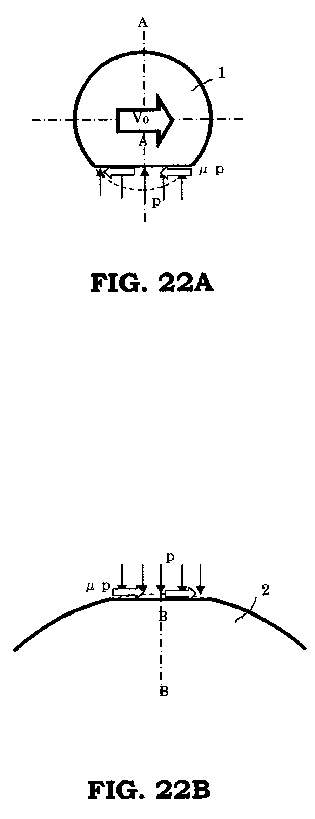

FIG. 21A shows force acting on the ball and FIG. 21B shows force acting on the inner ring. Assuming that a coefficient of friction is expressed as $\mu$, as the ball 1 moves at a speed vo in a direction as indicated by an arrow shown in FIG. 21A, a frictional force $\mu$p acts in a direction (direction $\theta$) away from an axis AA at a center of a convex portion of a contact surface. On the contrary, with a contact surface of the inner ring, the frictional force moves in a direction (direction $\theta$) toward an axis BB at a center of a concave portion of a contact surface as shown in FIG. 21B. Here, for reference, a case wherein a tangential line force acts on a Hertz's elastic contact surface is shown in FIGS. 22A and 22B. In general, when considering the tangential line force in terms of Hertz, it is presumed that the tangential line force slides in parallel (in a direction vo) to the contact surface and, hence, tangential line forces $\mu$p are entirely oriented in one direction (that is, leftward in FIG. 22A).

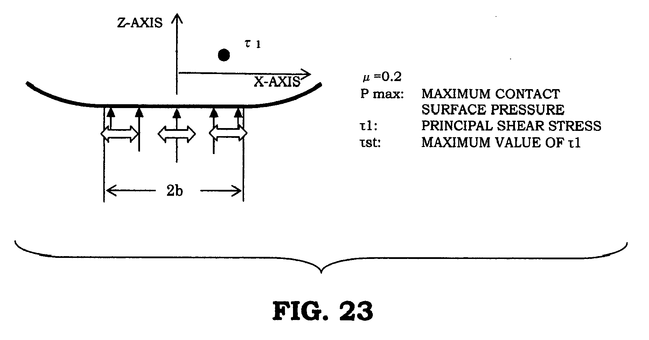

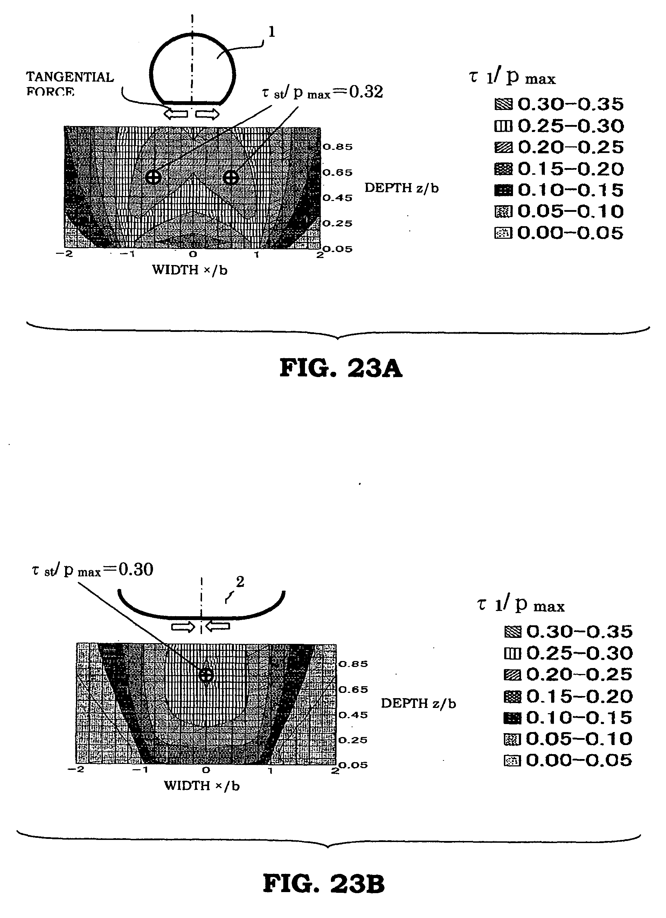

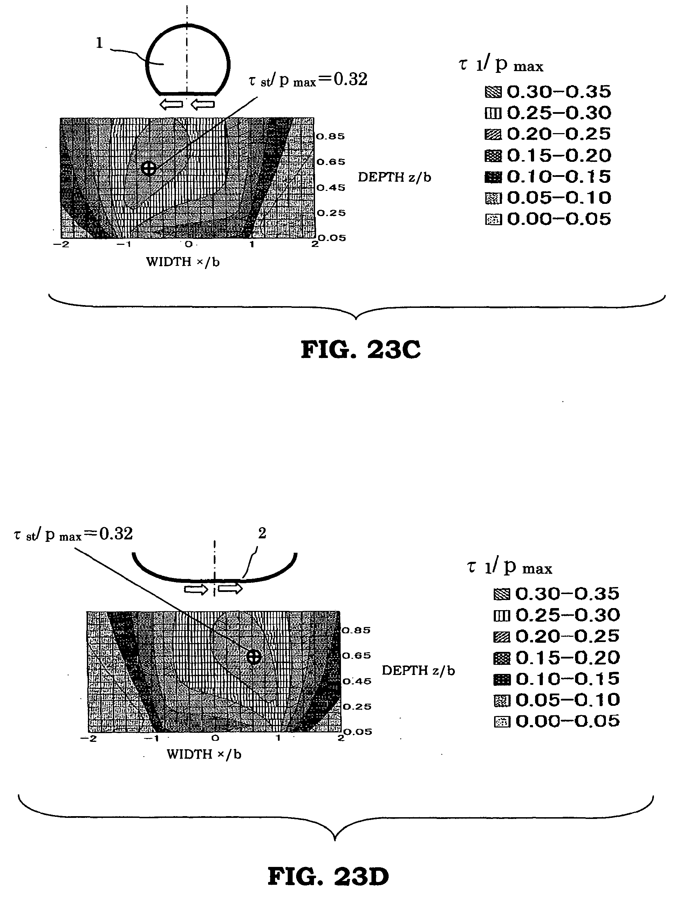

That is, there is a difference in orientation of the tangential line forces between cases of FIGS. 21A and 21B, wherein the indent (indentation) resulting from the plastic deformation is considered, and cases of FIGS. 22A and 22B for the Hertz's elastic deformation wherein no indent is considered (with a difference between a symmetry and an asymmetry with respect to the axis AA). Depending on differences in combination between a vertical force and the tangential line force acting on the contact surface, an interior of the ball and an interior of the inner ring undergo completely different stress conditions. FIG. 23 and FIGS. 23A to 23D show results upon calculating the stress in elastic deformation for the purpose of roughly understanding such differences. FIG. 23 shows a distribution of a principal stresst 1 depending on the difference in a direction of the tangential line force with a frictional coefficient of 0.2. FIGS. 23A and 23B show the distributions of stresses arising in the direction of the tangential line force shown in FIGS. 21A and 21B and FIGS. 23C and 23D show the distributions of stresses arising in the direction shown in FIGS. 22A and 22B. It is natural for the ball 1 and the inner ring 2 to have the stress distributions, which are symmetric with each other with respect to an axis Z in the presence of the tangential line force in the usual Hertz contact, and the both the ball and the inner ring have the maximum shear stress $\tau_{st}$ of 0.32 in identical values (whereas with no friction $\mu$, it is needless to say that $\tau$st lies at 0.30). In the meanwhile, upon analysis of a frontal collision of the ball (against the inner ring) this time that is supposed to encounter the brittle flaking, the ball 1 has $\tau_{st}$ laying at 0.32 and the inner ring 2 has $\tau_{st}$ laying at a value of 0.30 to be different in magnitude of the maximum shear stress.

That is, such a case suggests that the ball 1 exceeds the critical shear strain $\gamma_c$ faster than the inner ring. Thus, upon analyzing the tangential line force by taking the unevennesses of the contact surfaces of two objects into consideration, different strain conditions appear between the two objects. Although it seems that no remarkable difference exists between the stresses in analysis with in the elastic range set forth above, analyzing the plastic deformation should bring the fact that a further increased difference appears in strain between the ball and the inner ring (with a probability wherein a material characteristic $\tau$ - $\gamma$ curve in a plastic range exhibits an increase in stress merely by a small amount with the strain taking a large value in figures greater than one digit; that is, this means that the strain of the ball largely surpasses that of the inner ring).

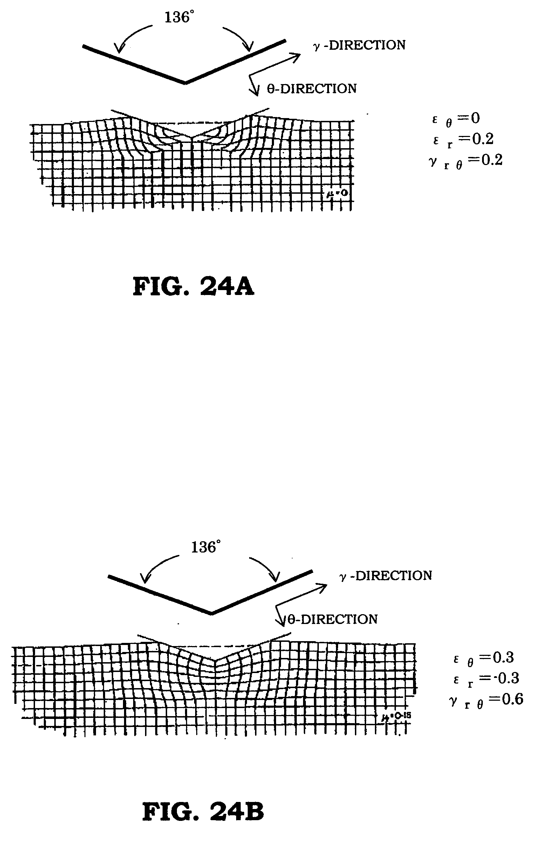

For instance, in accordance with an example conducted by Johnson, a strain resulting from a dent formed in soft material with a hard wedge is shown in FIGS. 24A and 24B. With such an example, in contrast to the shear stress expressed as r= 0.2 with no friction, the shear stress increases to a value $\gamma$ = 0.6 with the friction coefficient $\mu$= 0.15 to be three times that of the case with no friction. That is, in such a case, values on right sides of Formulae. 54, 55, 56, 57 takes a value three times (since there is a report that upon study of the indentation, a sphere, a circular cone, a pyramid, a circular cylinder and a wedge can be similarly organized and, hence, the strain is herein shown in terms of the example of the wedge studied by Johnson with a view to recognizing an image affected by the friction coefficient).

That is, upon consideration of the plastic deformation affected by the tangential line force (friction) as compared to the deformation within the elastic limit resulting therefrom, a remarkable difference exists in the strains resulting from the tangential force in these deformation patterns. That is, the present invention can explain the reason why the flaking occurs only in one (such as, for instance, only the ball in the presence of grease containing extreme pressure additives) of the two objects on the contact areas thereof. That is, it can be explained that when taking the influence of friction into consideration in the plastic deformation, only one object satisfies the adiabatic shear condition.

That is, although the method of calculating $\gamma$ and the strain rate, forming the present invention, needs a coefficient I(such as three times) to be multiplied in the presence of friction, it is more simple to be compared with the adiabatic shear condition and it is sufficiently useful to be used in actual design engineering. In addition, making efforts of arranging experimental data on various frictional coefficients enables an error to be simply grasped to serve as a correction coefficient, thereby making it possible for the correction coefficient to be simply used as a threshold value in judgment of the brittle flaking. That is, under an actual equipment condition, anybody can make judgment with a simple equation by conducting calculation to find whether or not the adiabatic shear condition is satisfied without executing hard calculation such as the FEM or the like.

Further, even if the FEM calculation is executed, completely different results appear depending on whether to treat a boundary condition or to treat a condition of constraint and, occasionally, end up with a difference in order to have no advantage over the simple method of the present invention after all. To be more treacherous, as the stress condition varies, the FEM needs to conduct experiments in general practice to confirm whether or not the result is correct (with requirement to confirm the correctness or the like of element breakdown). With a bearing for an automobile, not only the magnitude of stress but also a kind of stress vary depending on engines and, hence, experiments are required in the end and, therefore, the calculation method is of little use to a threshold calculation for making design in advance. Thus, an excellent advantage comes out in that a simple judgment can be made upon using Formulae. 54, 56, set forth above, without a need to execute the FEM analysis that takes much time and is fairly not used in designing on an actual site.

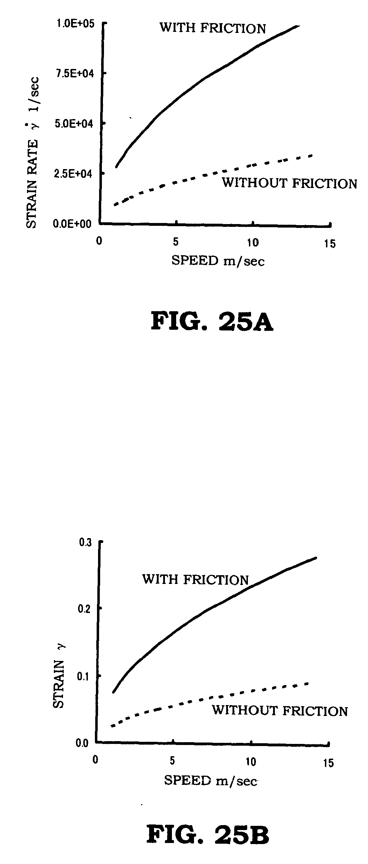

FIGS. 25A and 25B show calculated results (at values with time $t = t_p/2$) on the strain rate and strain, respectively, which are derived from formulae three times greater than those of the formulae 54 to 59 with an influence of friction three times as that of Johnson. It can be simply understood that the calculated result exceeds the adiabatic shear generating condition, as expressed as vo = 10m/sec in the absence of friction, and the presence of friction causes the adiabatic shear deformation, i.e., the brittle flaking, to take place even when the impact speed is low as expressed as vo = 1m/sec.

Thus, the present inventors have found that behaviors of the impact (with a strain rate greater than $10^2/sec$) load lie in strain conditions of an object (such as the ball), which collides against the other object and the other object (such as the inner ring) against which the object collides under static and dynamic (see FIG. 7) conditions like those in the related art, are not identical and, hence, a need arises for various studies to be conducted for a variety of factors as to which of component parts of the bearing has a speed, whether a radius of curvature is positive or negative and what is a ratio between vo and a curvature of a contact area (because of a probability in which depending on the degree of curvature of the contact area, an influence of a frictional force is cancelled or adversely affects).

Further, it can be explained that the brittle flaking is influenced in the presence of or absence of extreme pressure additives. An average pressure p at the contact area in the way in which the outer ring is hollowed (or the ball is hollowed due to collision of the outer ring) reaches 4800MPa (Eq. 46) and it is a matter of course for a difference in speed in a rotational direction between the ball and the outer ring at the contact area to be zero, whereby EHL lubrication (oil content-catch-up action due to viscosity of oil content) due to a rotational speed has no effect and, hence, a friction coefficient $\mu$ increases (for instance, under the EHL lubricating condition, the friction coefficient, which is nearly expressed as $\mu = 0$, varies to a value expressed as $\mu = 0.2$). Accordingly, as disclosed in the Johnson's literature, if, for instance, the shear strain $\gamma$ remarkably increases to exceed the critical shear strain $\gamma_c$ with the resultant occurrence of brittle flaking in the outer ring.

However, since the extreme pressure additives, providing the lubrication (with no need for the rotational speed) unfounded on the EHL theory, do not increase the frictional coefficient $\mu$ and do not exceed $\gamma_c$, no brittle flaking takes in the outer ring (particularly under circumstances where the pressure has a value as high as 4800MPa like the present case, the extreme pressure additives become effective). However, in case of the collision between the ball and the inner ring, the extreme pressure additives, which have no need for the speed to achieve lubrication, fly in all directions from the rotating inner ring (although such flying of the extreme pressure additives is effective for the lubricating condition resulting from oil content based on the EHL theory) due to a centrifugal force thereof.

Thus, the contact area between the ball and the inner ring suffers from a shortage of the extreme pressure additives at all times with no capability of lubricating the indentation caused by the collision, resulting in an increase in the friction coefficient to cause the brittle flaking to take place in the ball. Thus, the effect of the extreme pressure additives, formed of grease, according to the present invention can be excellently explained. (It is easily speculated that oil content, prevailing in the contact area in the course of plastic deformation, is compressed under a hermetically sealed condition and exposed to high temperatures and high loads and dissolved into hydrogen that enters an inside of the bearing. That is, when applied with the impact to the extent in that the brittle flaking takes place, things are going for hydrogen to be observed.)

From the foregoing, while it is clear that with the ball bearing, corresponding to the type 6202, for use in a small-type alternator, the presence of the ball and the inner ring (or the outer ring) moving at a relative speed approximately expressed as vo = 10m/sec provides probabilities for the adiabatic shear deformation to take place (it is needless to say that in the presence of the friction, naturally, the relative speed may be less than the value vo = 10m/sec), attempts have also been undertaken by the present inventors to find probabilities in such an impact speed is achieved.

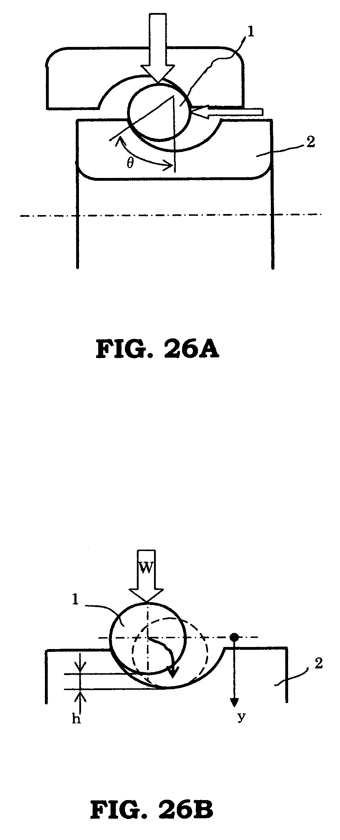

That is, in order the collision to be encountered in the most effective manner, it is naturally sufficed for the ball and the inner ring to collide against each other in a radial direction and, so, cases shown in FIGS. 26A and 26B are considered. FIG. 26A represents a status in which a radial load and thrust load act on the ball from the outer ring toward the inner ring 2 of the ball bearing in a direction as shown by whitened arrows (with the loads being relatively identical even when applied not from the outer ring but from the inner ring). FIG. 26B is an enlarged view of a contact area between the ball and the inner ring shown in FIG. 26A. The ball 1 is held in contact with the inner ring at a point deviated from a center of the inner ring 2 by $\theta$ and the ball 1 is located at a position that is elevated from a bottom of a bearing ring of the inner ring 2 by h. (It is needless to say that the thrust load has no need to be of the type that is forcibly applied as a preliminary pressure but may be of a thrust component resulting from an inclination of an axis caused by the radial load and the point is that everything is sufficed if the deviation occurs by $\theta$ from the center of the inner ring.)

If it is supposed that a load is applied in a direction opposite to the thrust load at a value greater than the thrust load due to some reasons (such as vibrations in an axial direction of an engine), the ball 1 is caused to collide against the bearing ring upon describing a parabola as shown by an arrow in FIG. 26B due to influences of the thrust load, in the opposite direction, and the radial load W. In this case, depending on the conditions of the thrust load in the opposite direction, the ball 1 collides against a bottom of the bearing ring (with the resultant movement of the ball by h). Assuming that the ball has a mass m, a dynamic equation is expressed as

$$m\ddot{y} = W \qquad \cdots (60)$$

and

$$V_0 = \sqrt{\frac{2hW}{m}} \qquad \cdots (61).$$

Now, if h = 15$\mu$m, W = 60 Kg and m = 0.9g, Eq. 61 gives vo = 4.5m/sec. Therefore, this case has no problem in the absence of the friction but has a probability to satisfy the adiabatic shear condition in the presence of the friction with the resultant occurrence of the brittle flaking. (That is, the vibrations in the thrust direction become great and, under circumstances where the extreme pressure additives have a withstand pressure greater than 4800MPa, the brittle flaking takes place.) It is needless to say that Eq. 61 can be applied to a situation under which the ball becomes free, due to some reasons (even if a contact point is initially deviated by $\theta$), to have a potential energy with a height h. There is a probability that a belt tension instantaneously becomes negative during deceleration of the engine as observed in, for instance, a serpentine drive. When this takes place, the bearing entirely has no load to release the contact between the ball and the inner ring or the outer ring and, upon termination of the deceleration, the ball is exerted with the load again, causing the ball to encounter the collision. For a further interest, although there are various probabilities wherein an impact speed is generated, in any event, it is simply understood that under a situation where a value of the impact speed represents the presence of friction, the presence of the impact speed greater than vo = 1m/sec enters a dangerous region.

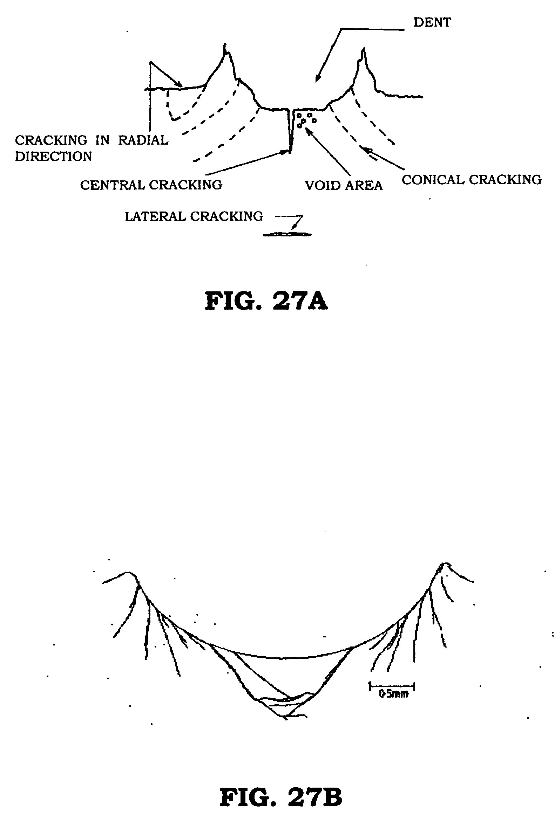

Verification is conducted to examine whether a macro status (so-called macro face) belongs to the area A in FIG. 1 or the structure shown in FIGS. 6A and 6D. In this connection, various experimental test results coming from a hard ball colliding against a soft flat surface portion (semi-infinite plate), are disclosed in the literatures. FIG. 27A shows an experimental test result, conducted by Shockey using a steel sphere with a diameter of 1.2mm caused to collide against a plate of SiC at a speed vo = 182m/sec. (Although this shows an example in which an indentation is formed on the flat plate, it is needless to say that the ball may be considered to have a flat surface formed in a curvature.) Thus, it is understood that the flat surface corresponds to the macro face of the alternator in brittle flaking thereof. Further, although it is known that with the impact theory, there is a phenomenon (so-called scabbing or spalling) in which flaking occurs on a flat plate with a finite thickness subjected to the impact at a rear side thereof in opposition to an impact point due to an influence of a spherical wave (impact wave) caused by compression, it is needless to say that such a phenomenon corresponds to the portion B shown in FIG. 2A. FIG. 27B shows the other example (derived from the Hutchings's literature) indicating a pattern view of Shear Bands using a tungsten carbide sphere with a diameter of 3.175mm colliding against a plate of Ti6A 14V at a speed vo = 330m/sec. It is understood that this phenomenon looks like the macro face of the brittle flaking of the bearing.

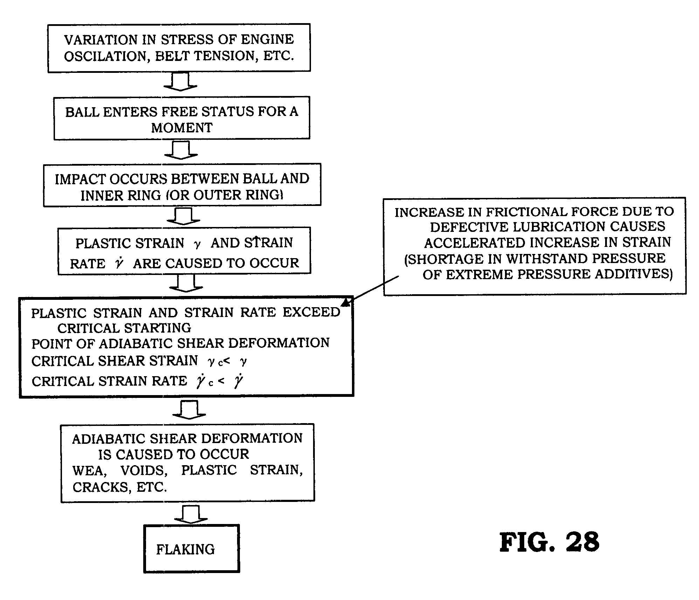

FIG. 28 shows a mechanism, forming the method of the present invention, in which the brittle flaking occurs in the bearing. According to the adiabatic shear deformation theory, it becomes possible to explain not only the micro and macro faces (statuses) in the bearing resulting from the brittle flaking based on the white bands but also features as viewed in terms of the phenomenalism set forth above.

That is, the feature 1 indicates that the macro face is caused by the collision (see FIGS. 27A and 27B) is related.

The feature 2 represents that the collision of the ball has no directional characteristic (with no effect from restriction in a direction in which a fixed load is exerted).

The feature 3 is verified that the WEA varies due to a difference in the degree of the adiabatic shear condition.

The feature 4 results from a phase in that the adiabatic shear deformation causes material to be hardened with a hardness greater than that realized in usual heat treatment.

The feature 5 comes from a reason in that there is the adiabatic shear deformation forming a plastically unstable phenomenon. The localized plastic flow and plastic strain are caused by adiabatic shear deformation that is the plastic instable phenomenon.

The feature 6 depends on a difference in an impact speed, a difference in a friction coefficient (involved in positive and negative values) and a degree of a curvature.

The feature 7 is an issue of an impact speed and a magnitude of a mass and has no relationship with a bearing load capacity.

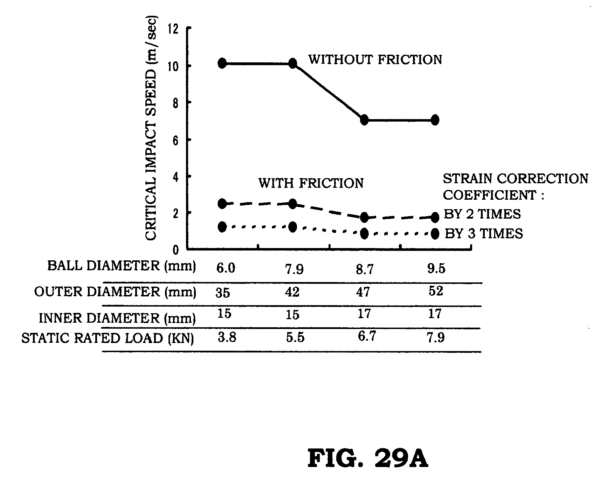

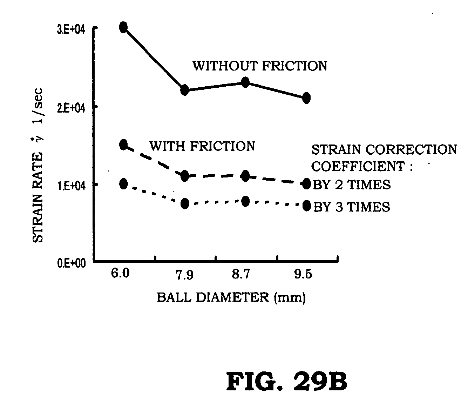

FIGS. 29A and 29B show the relationships between a critical impact speed, (which represents a speed at which an average strain y, internally generated in an element ball colliding against an inner ring, falls in a critical shear strain $\gamma_c$ = 0.08 and if the ball encounters the collision at a speed greater than such a critical speed, then, the brittle flaking takes place) for a bearing frequently used in an alternator, and an average strain rate. If a rated load is doubled, the critical impact speed bears almost no variation but rather to decrease in a disadvantage. However, as will be understood from the strain rate in the presence of the friction, the presence of an increase in size of the ball results in a disadvantage in the critical impact speed v but an advantage in the strain rate. Thus, it can be concluded that even if the size changes in the event, the same effect results in the degree of a danger.

The feature 8 is confirmed such that the greater the fluctuation band in stress, the greater will be the probability for the ball to enter a free state.

The feature 9 is verified such that the ball cannot be accelerated unless the radial load increases to some extent (Eq. 61).

The feature 10 indicates a phase in that as the radial load increases too much, the relationship h = 0 is established and the impact speed vo becomes zeroed.

As to the feature 11, while as the ball repeatedly encounters small collisions (in extended time intervals for tests), the hardening occurs to increase the flow stress Y with the resultant decrease in the critical shear strain $\gamma_c$, the tempering causes the flow stress to be restored.

From Y = 1000MPa and $\gamma_c$ = 0.11, Y = 1500MPa

$\gamma_c$ = 0.06 (from Eq. 37)

With the present invention set forth above, the causes of the brittle flaking is clarified to be derived from the adiabatic shear deformation, which forms the plastically instable phenomenon occurring under the high shear strain-rate deformation, while indicating the critical values (of $\gamma_c$, $10^2$/sec) of the strain and the strain rate that have an influence on the occurrence of such adiabatic shear deformation whereas the causes by which the adiabatic shear deformation takes place are clarified to be the impact phenomenon for thereby permitting every body to execute the calculations of the strain and the strain rate, at which the adiabatic shear deformation takes place, using the simple calculation formulae without using specialized methods, such as the FEM or the like, that take time. Analyzing such results could have beautiful solution to describe various features that could not have been achieved in the related art theory. As a result, an excellent progress is provided by the present invention to provide a success in completely explaining various features that were unable to be explained with the related art hypothesis. Although a further study is needed, a method can be demonstrated for designing a rolling bearing so as to address the brittle flaking that could not be fully addressed up to now. That is, a designing method is clarified to address the issue of brittle flaking of a rolling bearing that cannot be achieved up to now. An engineer, who desires to design a bearing, is able to make calculations based on this method to take a measure on a stress side to determine which bearing is to be selected.

To list up examples of causes for stress in view of using the designing method of the present invention, it can be easily understood that according to the designing method of the present invention, it is sufficed for the features, set forth above, and reasons thereof to be considered as a measure to prevent the brittle flaking from occurring. That is, there is a need for the stress not to cause the ball to enter the free condition even for a moment; that is, the ball should remain in contact with the inner ring or the outer ring. To this end, the designing method of the present invention should satisfies the requirements wherein Radial Load < Thrust Load (with h and $\theta$ needed to lie at small values), tension of a belt needs not to take a negative value caused by an adverse affect resulting from an inertial force even during deceleration of an engine and a frequency of engine explosions needs not be coincident with a characteristic frequency of the belt and a characteristic frequency of an auxiliary unit body.

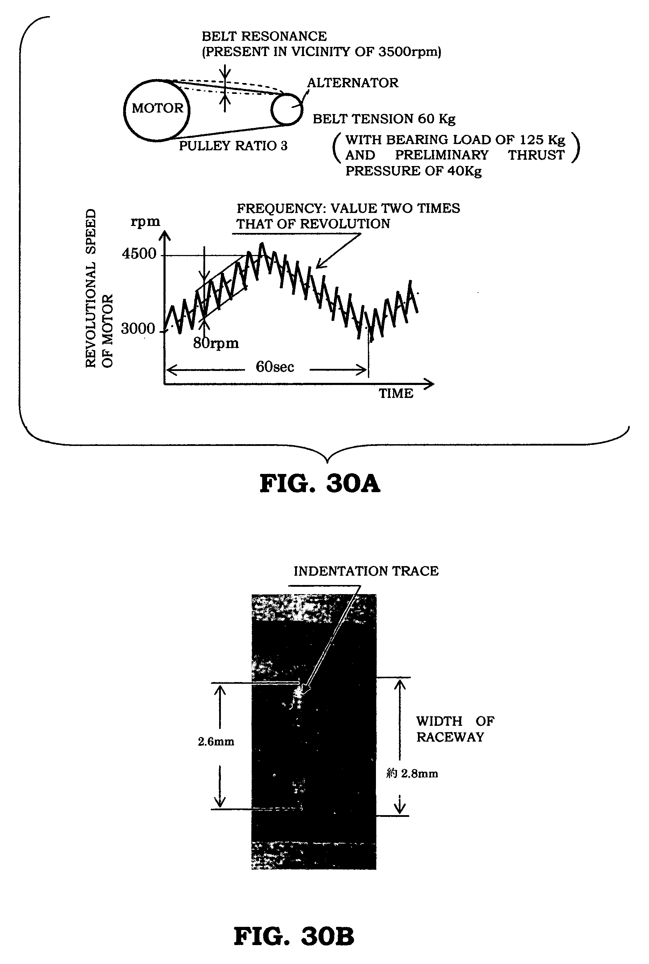

The present inventors have conducted recurrence tests for further examination on such a mechanism. The tests were conducted under conditions in which a motor is controlled in order to simulate an actual four-cylinder engine while applying rippled rotations at an average rotation fluctuation rate of 2% (that is a commonplace fluctuation rate in the revolution speed of the actual engine whereas the revolution speed fluctuates by a value of 30% at a speed in the vicinity of idling) with an order two times the revolution speed. FIG. 30A is a schematic view of a test machine to show a condition such as a revolution speed pattern. The test machine was set so as to include a resonance in a lateral direction of the belt in the way of up and down fluctuations in the motor revolution (with the belt resonating at a magnitude of 2G that can be neglected as compared to the actual engine vibrations with the magnitude of 20 to 30G).

Other conditions include "no vibrations, normal temperatures and no load on the alternator" and entirely common stress (naturally, the engine provides further remarkable stress, like 20 to 30G with a bearing load of 150Kg at a temperature of 100˚C with alternator load of 50A, etc., and, of course, the belt has various resonances). Thus, such conditions provide extremely lower stress than that of the actual engine to provide conditions under which since the related art stress theory has no stress caused by the temperature, the fixed load, the fluctuating loads and the vibrations, no brittle flaking naturally takes place. The related art hypothesizes (of both the hydrogen theory and the stress theory) have tendencies to place emphasis on the load with the resultant tendency in which the recurrence tests were conducted upon application of large bearing load and large vibrations. In contrast, with a view to daringly pretend clarifying the present inventors' theory, the tests were conducted using low stress. In addition, the conditions were selected to include factors (such as the rippled revolutions and resonance of the belt) that are not focused in the related art.

As a result, the brittle flaking with the white bands occurred in the ball even for 450 hours. FIG. 30B shows a photograph of a raceway of the inner ring. In this photograph, a mark of an indentation formed in an ellipsoid with a long diameter 2.6mm was observed (with the photograph being taken in an oblique direction to cause the mark to be viewed in a falcated shape due to the influence of a curvature). The ellipsoid has a trouble to be viewed at a central area thereof due to the influence of racing of the ball, but it seems that the ellipsoid has a short diameter of approximately 0.32mm with a depth greater than $1\mu$m. There were other indentations each with a similar size formed on a racing surface of the inner ring in eleven positions at angles oriented in random directions. It follows that a usual racing mark is formed on the racing surface of the inner ring in a circumferentially peripheral direction resulting from the racing of the ball and has a width of approximately 2.8mm (with the racing mark formed in the same width in an entire periphery whose value is substantially equal to the long diameter of the contact ellipsoid that can be calculated from the bearing load conditions).

Further, while the ball surface with non-flaking is observed to have a contact ellipsoid with the same size as that of the inner ring, no indentation is observed even though a raceway of the outer ring is formed with a usual ball racing mark. Additionally, upon detailed analysis on an area around the contact ellipsoid, destructed extreme pressure additives were observed and the area, in which the destruction occurred, took even an oxidized condition. To review anew, the results on the present recurrence tests have the features described below.

(I) The bearing load is less (to be as small as 125Kg), the fluctuating load is vanishingly less (to be approximately $\pm$5Kg during resonating of the belt) and the bearing has a static rated load of 380Kg. On account of such parameters, it is hardly possible for the bearing to suffer from damages or indentations in view of a common sense.

(II) The indentations occur in both the ball and inner ring each in a substantially elliptical shape and do not include a "slipped ellipsoid (an ellipsoid elongated in a slip direction)" that occurs when the ball slips in a short diameter direction. That is, the indentation is a dent formed when the ball and the inner ring are pressed in a radial direction.

(III) Due to the presence of the indentation formed not in the outer ring but in the inner ring, the indentations are generated in the ball and the inner ring upon collision between the ball and the inner ring (with the collision being considered not to be caused by the bearing load acting between the ball and the inner ring but to act only on one of the contact areas because of the absence of traces on the outer ring). That is, it is conceived that the brittle flaking takes place due to the impact.

(IV) While the width of the raceway and the long diameter of the indentation are substantially equal (with values of 2.8mm and 2.6mm), the raceway encounters the elastic deformation and the indentation is formed on the plastic deformation (this is true because it can be discriminated from at least the raceway). Whatsoever it may be the elastic deformation or the plastic deformation in the first place, the contact ellipsoid is determined due to the contact between two objects and, hence, has an entire shape that is geometrically and uniquely determined. That is, calculating Eq. 43 by substituting 2a = 2.6mm in the present example gives

2b = 0.36mm

and

$X_1 = X_2 = 3.5$ mm.

In this calculated result, the short diameter width has a value nearly equal to an actually measured value and has a slightly deep depth.

That is, it is meant that even when the compressed deformation with $3.5\mu$m (with a trace of the raceway being marked) during normal operating conditions, the deformation remains in an elastic range and even when the compressed deformation with the same value of $3.5\mu$m (with a trace of the indentation being marked) during impact conditions, the deformation remains in the plastic deformation (in a permanent deformation with a depth greater than at least $1\mu$m as set forth above). Stated another way, even in the occurrence of the same amount of deformation, the deformation does not exceed the yield stress Y during the normal operations and exceeds the yield stress Y during the impact conditions. In order to explain such a phenomenon, it is beyond rational explanation if no consideration is made for the influence of the friction as set forth above. That is, it is conceived that the bearing is adequately lubricated during the normal operations with the friction coefficient $\mu$= 0 and a certain amount of $\mu$ is present during the impact conditions.

(V) Due to the presence of traces in the indentation mark wherein degradations occur in the extreme pressure additives or no effect is present therein, it is concluded that the extreme pressure additives are damaged to cause the friction to be present.

That is, the above-described five features back up the present inventors' anticipation in that the flaking of the ball is not caused by the collision with the outer ring but by the colliding phenomenon with the inner ring. Further, the result seems like it is better to think that the extreme pressure additives are damaged with the resultant increase in the friction coefficient due to the pressure arising from the collision for thereby causing the flaking to take place. (It is needless to say that neither the related art hydrogen theory can explain such a result nor the stress theory has a difficulty to explain the same due to the presence of an increase in the load per se.) Therefore, attempting to calculate the result of the recurrence tests using the designing method of the present invention, wherein in order for an indentation to be formed in a contact ellipsoid (with a = 1.3mm and b = 0.18mm) on a final stage, if $\mu$= 0, then, the following relationship needs to satisfy

vo = 5.2mm/sec

and in this moment,

$$\gamma = 0.05, \quad \dot{\gamma} = 2.1 \times 10^4/\text{sec (in average value)}.$$

Accordingly, the shear strain does not reach the critical shear strain $\gamma_c$ = 0.08 (from Eq. 39). That is, in the absence of the friction, no adiabatic shear deformation takes place when subjected to the indentation in such a size and, hence, no brittle flaking takes place. (The value of $\gamma$ slightly exceeds the elastic limit and it seems like a slight degree of plastic deformation may take place.)

On the contrary, the figure is calculated about how much impact speed is needed in the presence of the friction for the strain of the contact ellipsoid to exceed the critical shear strain $\gamma_c$ and suppose a correction coefficient of the strain caused by friction takes a value of 2, the impact speed vo = 2.6mm/sec needs to be satisfied. In this case, a strain rate of

$$\dot{\gamma} = 3 \times 10^4/\text{sec}$$

is realized. Further, suppose the correction coefficient of the strain takes a value of 3, the impact speed vo = 1.2mm/sec needs to be satisfied. In this case, a strain rage of

$$\dot{\gamma} = 3 \times 10^4/\text{sec}$$

is realized.

While there is a need for the correction coefficient of the additives, in actual use, to be obtained upon experiments (in anyway it seems like the correction coefficient varies from 1 to 3) in official practice as set forth above, the presence of the impact speed in a range of approximately vo = 2m/sec causes the strain rate to exceed a value of Eq. 38 with the resultant occurrence of the adiabatic shear deformation and, hence, the brittle flaking takes place in the presence of the friction. That is, this corresponds to the fact that there was a trace in which defects occurred in the present recurrence test.

Further, while another bearing, which has been tested for 400 hours under the same condition, was disassembled for research and the brittle flaking was not found, indentations and defective lubrications are similarly observed in the ball and the inner ring at several positions thereof.

In addition, the present inventors have conducted a test under a condition wherein in order to clarify stress factors, the motor revolution speed was fixed at a value of 700±10 rpm (at a value corresponding to a resonant point of a belt), the ball is similarly flaked.

As a result of analyzing these phenomena, the present inventors have reached a conclusion that during the recurrence tests conducted by the present inventors, the ball temporarily enters the free status, due to the influence resulting from the fluctuation in rotation of the motor and resonance between the belt and the alternator main body, causing the ball to collide against the inner ring under the adiabatic shear deformation condition whereby the flaking occurs in the white bands, i.e., the brittle flaking takes place. It was estimated that the ball impacted against the inner ring at the impact speed of approximately vo =2m/ sec.

That is, a characteristic frequency (a lateral vibration $f_1$ and a vertical vibration $f_2$) of the belt is given by

$$f_1 = \frac{1}{2H}\sqrt{\frac{T}{M}} \qquad \qquad \cdots (62)$$

$$f_2 = \frac{R}{2\pi}\sqrt{\frac{AE}{JH}} \qquad\qquad \cdots(63)$$

where M represents a mass of a belt per unit length; E represents Yung's modulus; A represents a cross-sectional area; H represents a length of a span; T represents tension; J represents a moment of inertia; and R represents a radius of a pulley.

If the characteristic frequencies $f_1$, $f_2$ and explosion components of the engine synchronize with each other, resonance occurs on the belt. (In actual practice, it is needless to say that the vertical vibration $f_2$ has a portion, deviated from a value of Eq. 63 due to interactions of all the pulleys on which the belts are tensioned, which takes a characteristic value and there are the same number of characteristic frequencies as that of the pulleys. Eq. 63 represents the equation for indicating such factors.) Although it is a usual practice for modern engines to operate on serpentine drive, bearings of belt-driven auxiliary units encounter a large number of lengthwise and breadthwise resonant points due to a difference in load variations (with T infinitely varying) of the engine and associated auxiliary units and a span (with a variation in H) of the respective pulleys. That is, there is an increased danger of suffering from the brittle flaking. In other words, due to a slight difference in the recurrence test conditions, the presence of or absence of the brittle flaking is determined.

In the foregoing, while the brittle flaking was recapitulated utilizing the lateral resonance of the belt upon which the mechanism is verified, it will be appreciated that the adiabatic shear deformation may occur due to various reasons. That is, it has been founded by the present inventors that if the conditions are satisfied for the ball to enter the free status, there are lot of opportunities for the brittle flaking to take place in the ball.

Further, according to this mechanism, since avoiding the occurrence of the friction enables the strain to be minimized, no probability occurs for the brittle flaking take place in the bearing of a usual engine as a matter of practice. No problem occurs at all when the ball bears a rolling contact in a lubricating method (in a so-called fluid lubrication and EHL lubrication) by which oil is caught up on the contact surface due to viscosity and speed of oil to enhance the formation of an oil film (that is, the presence of the speed allows an oil film strength to withstand a sufficient pressure). On the contrary, when the ball is caused to collide against the inner ring, the rolling speed becomes zeroed with the resultant difficulty in enhancing the oil film (with no wonder for the oil film to loose the withstand pressure) and, therefore, a need arises for a lubricating agent, which does not rely on viscosity and speed of oil, to be prepared for the purpose of lubricating the colliding portions. That is, upon using extreme pressure additives, additives, solid lubricating agent, non-abrasive membrane materials (such as Diamond-Like Carbon membrane (also called "DLC" membrane)), or others, it is sufficed for these materials to have a withstand pressure at a value greater than the indentation pressure p expressed in Eq. 46 in an operating temperature range. To say about a usual bearing material, it seems that the indentation pressure may be sufficed to lie at p = 7000MPa. Then, there is no influence of the friction with the resultant increase in the critical impact speed (see FIG. 29), precluding the occurrence of the white bands (with no occurrence of a great impact speed in a usual practice).

While the designing method of the present invention has been described taking the ball bearing as the example, it is needless to say that the present designing method can be applied to all rolling bearings with respective rolling elements (such as roller bearings). Further, as will be apparent from FIGS. 29A and 29B, it seems that the white bands are easily generated (in the presence of friction) due to actual stress at the greatest opportunity for the ball size used in FIGS. 29A and 29B because the bearing with the ball having a large diameter causes the strain rate to be less than a value of $10^4$/sec with the resultant shortage in the strain rate whereas the ball with a small diameter has an increased critical impact speed to cause a shortage in the impact speed. (Of course, even at the strain rate of $10^2$/sec, the white bands can be generated and in this moment, the critical shear strain $\gamma_c$ does not lie at 0.08 and takes a further increased value. Accordingly, the critical impact speed increases with the resultant same tendency as those shown in FIGS. 29A and 29B.) That is, the alternator, incorporating a ball bearing mainly using a ball with such a diameter, seems to mostly and easily encounter the brittle flaking and this tendency appears even in experimental tests on an actual engine.

Moreover, the design technique according to the present invention will not be confined to the rolling bearings, but can widely be applied to mechanical element parts having rolling contacts. In other words, any parts can enjoy the merits of the design according to the present invention, as long as there is a potential for occurrence of brittle flaking resultant from adiabatic shear bands due to adiabatic shear deformations in cases where stress is applied to such rolling contacts between a rolling member and a stationary member or between two rolling members. Such a contact (parts) is therefore included in transmissions (such as continuously variable transmission (CVT)) and a contact on a tooth plane of a gearwheel as well as the rolling bearings. Of course, the rolling bearing includes a ball bearing, a roller bearing, and a needle bearing.

In addition, note that the adiabatic shear bands do not always appear in white, as already been mentioned. In the case of using high-tension steel, the adiabatic shear bands are observed as being white, while in the case of using general steel and non-iron metal, they are observed as being non-white colors such as black. Regardless of differences in such colors, materials other than the high-tension steel still need to suppress adiabatic shear bands from occurring therein, because brittle flaking will occur in an extremely short time once the adiabatic shear bands occur. Hence the design technique according to the present invention can be used effectively for such materials other than the high-tension steel.

Further, the determination and estimation of probability for occurrence of brittle flaking in rolling contacts can be conducted by any engineers in an easier and more accurate fashion, with no much dependence on veteran engineers' experience and on fragile determined and estimated results. For instance, an engineer can use a personal computer with spreadsheet programs to conduct the determination and estimation, in which results (that is, results showing whether or not there is a potential for occurrence of brittle flaking) can be obtained within one minute from entering data, providing an excellent advantage in designing the rolling contact parts.

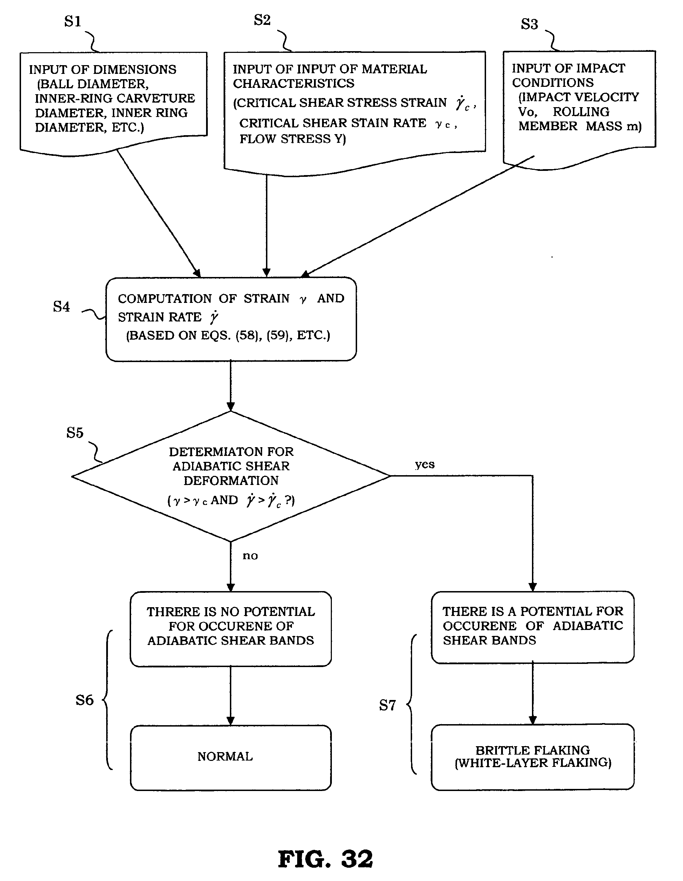

By way of example, the configurations for determining brittle flaking which may occur in a ball bearing are illustrated in FIGS. 31 and 32, where FIG. 31 outlines a block diagram of a personal computer (computer) 101 used by an engineer and FIG. 32 outlines processing carried out by the computer 101 for the determination.

The computer 101 shown in FIG.31 is provided with an interface 102, CPU (central processing unit) 103, ROM (read-only memory) 104, RAM (random access memory) 105, input device 106, and display 107. Of these the CPU 103 executes a program exemplified in FIG. 32 and data of the program is installed in the ROM 104 in advance. The program shown in FIG. 32 is written to accomplish the determination and estimation of brittle flaking based on the concept according to the present invention.

The flowchart shown in FIG. 32 will now explained in brief. In response to its activation, the CPU 32 operates to read the data for the determination and estimation from the ROM 104 and becomes ready for engineer's input operations (step S1 to S3). Such input operations include input of dimensions (the diameter of a ball, the curvature diameter of an inner ring, the diameter of the inner ring, and others), input of material characteristics (a critical shear stress strain $\dot{\gamma}_c$, a critical shear stain rate $\gamma_c$, a flow stress Y) and input of impact conditions (an impact velocity Vo and the mass m of a rolling member).

Then the CPU 103 carries out computation based on necessary formulae such as Eqs,. (58), (59), and others to obtain a strain $\gamma$ to be predicted and a strain rate $\dot{\gamma}$ to be predicted (step S4). The CPU 103 proceeds to step S105, where whether or not there is a potential for occurrence of adiabatic shear deformations is determined by making a comparison between the values $\gamma$ and $\gamma_c$, and between the values $\dot{\gamma}$ and $\dot{\gamma}_c$. Specifically, the comparison of $\gamma > \gamma_c$ and the comparison of $\dot{\gamma} > \dot{\gamma}_c$ are carried out concurrently. When the compared results reveal that both the conditions $\gamma > \gamma_c$ and $\dot{\gamma} > \dot{\gamma}_c$, are not realized concurrently (NO threat), the CPU 103 concludes that there is no potential for occurrence of adiabatic shear bands (normal; step S6). In contrast, when the compared results reveal that both the conditions $\gamma > \gamma_c$ and $\dot{\gamma} > \dot{\gamma}_c$ are realized concurrently (YES threat), the CPU 103 concludes that there is a potential for occurrence of adiabatic shear bands (step S7). That is, in this case, it is recognized that the ball bearing may be subjected to brittle flaking (i.e., white band flaking), if actually used. The above determined and estimated results are presented by the display 107, for instance.

The above processing can also be applied to various general parts with rolling contacts, not confined to the ball bearing.

From the foregoing, the mechanism is clarified by the present invention and there is a clear threshold (target value) for the brittle flaking to be prevented whereby it becomes possible to achieve design and study in advance. Also, clear measures can be undertaken and no need arises for implementing a tremendously inefficient method like those of the related art requiring tests in an actual machine for confirmation. Further, judgment of the test results can be made in the light of the mechanism with no errors. In addition, no need arises for the bearing to have an unnecessarily large size or to have a precision. In such a way, the design method of the present invention has an excellent advantage in that the design can be correctly made to address the occurrence of the brittle flaking, encountered by the rolling bearing, in a simple fashion.

The present invention may be embodied in other specific forms without departing from the spirit or essential characteristics thereof. The present embodiments and modifications are therefore to be considered in all respects as illustrative and not restrictive, the scope of the present invention being indicated by the appended claims rather than by the foregoing description and all changes which come within the meaning and range of equivalency of the claims are therefore intended to be embraced therein.

**Claims**

1. A method of designing a mechanical element provided with a rolling contact realized between two components one of which is a rolling element and the other of which is either a rolling element or a stationary element, comprising steps of;
   determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and

estimating that brittle flaking resulting from the adiabatic shear bands have a potential for occurrence within the at least one of the components, when it is determined that the adiabatic shear bands have a potential for occurrence.

2. A method of designing a rolling bearing provided with components including rolling elements, an outer ring, and an inner ring which come into contact with each other, comprising steps of:

determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and

estimating that brittle flaking resulting from the adiabatic shear bands have a potential for occurrence within the at least one of the components, when it is determined that the adiabatic shear bands have a potential for occurrence.

3. A method according to claim 2, wherein the determination step includes steps of:

determining whether or not at least one of a condition causing the high deformation rates and the unstable plastic phenomenon is satisfied,

wherein the condition causing the high deformation rates is defined by an equation of

$$\dot{\gamma} < 10^2 / \sec \qquad \cdots \ (1) \ ,$$

where $\dot{\gamma}$ a true shear strain rate of true shear strain to be caused within the at least one of the components during a plastic deformation thereof, and

the unstable plastic phenomenon is defined by an equation of

$$\gamma < \gamma_c \qquad \cdots \ (2) \ ,$$

where $\gamma$ is a true shear strain to be caused within the at least one component and $\gamma_c$ is a critical shear strain depending on a material characteristic of the at least one component, and

estimating that the adiabatic shear bands have no potential for occurrence, thus causing no brittle flaking, provided that the at least one of the condition causing the high deformation rates and the unstable plastic phenomenon is satisfied.

4. A method according to claim 3, wherein the critical shear strain $\gamma_c$ is obtained by calculating, under an adiabatic condition, an equation of

$$\left. \frac{\partial \tau}{\partial \gamma} \right)_{T, \dot{\gamma}} + \left. \frac{\partial \tau}{\partial T} \right)_{\gamma, \dot{\gamma}} \frac{dT}{d\gamma} + \left. \frac{\partial \tau}{\partial \dot{\gamma}} \right)_{T, \gamma} \frac{d\dot{\gamma}}{d\gamma} = 0 \qquad \cdots \ (3) \ ,$$

where $\tau$ is flow stress, $\gamma$ is the true shear strain, $\dot{\gamma}$ is the true shear strain rate, and T is temperature, and assigning a resultant strain value calculated on the equation (3) to the critical shear strain $\gamma_c$.

5. A method according to claim 4, wherein the critical shear strain $\gamma_c$ provides a component material characteristic expressed by either an equation of

$$\gamma_c = -\frac{C_v n}{\left.\dfrac{\partial \tau}{\partial T}\right)_{\gamma,\dot{\gamma}}} \qquad\qquad \cdots \quad (4)$$

or an equation of

$$\gamma_c = -\frac{C_v}{\left.\dfrac{\partial \tau}{\partial T}\right)_{\gamma,\dot{\gamma}}} - \frac{Y'}{k} \qquad\qquad \cdots \quad (5) \ ,$$

where C is a volume specific heat, n is a work hardening exponent in parabolic hardening, Y' is a yield stress of shear, and k is a slope in linear hardening.

6.  A method according to claim 4, wherein, on condition that the component material characteristic is expressed by an equation of

$$\tau = \left[A + B\gamma^{n'}\right]\left[1 + C'\ln\left(\frac{\dot{\gamma}}{\dot{\gamma}_0}\right)\right]\frac{T_M - T}{T_M - T_0} \qquad \cdots \quad (6) \ ,$$

the critical shear strain $\gamma_c$ is expressed by an equation of

$$\gamma_c = \frac{n'\rho C_P (T_M - T_0)}{0.9(A+B)} - \frac{A}{B}\gamma_c^{1-n'} \qquad\qquad \cdots \quad (7) \ ,$$

where A, B, C' and n' are constants, $T_M$ is a melting point, To is an ambient temperature, $\dot{\gamma}_0$ is a strain rate at the ambient temperature, $\rho$ is a mass density, and $C_p$ is a specific heat.

7.  A method according to claim 3, wherein the critical shear strain $\gamma_c$ is given as 0.08 serving as a threshold for determining whether or not the adiabatic shear bands have a potential for occurrence.

8.  A method according to claim 2, wherein the determining step is configured to determine that the adiabatic shear bands have no potential for occurrence, provided that a relative collision velocity v between the rolling element and the outer or inner ring in a radial direction of the rolling bearing is met by an equation of

$$\text{v} < 1\text{m/sec} \qquad\qquad \cdots \quad (8) \ .$$

9.  A method according to claim 2, wherein
    the rolling bearing is incorporated in an alternator for combustion engines and contains a lubricant of which withstand pressure p is independent of both of viscosity of oil contained in grease and velocity, the lubricant including an additive such as an extreme pressure additive or solid lubricant, and
    the determining step is configured to determine that the adiabatic shear bands have no potential for occurrence, provided that the withstand pressure p of the lubricant is met by an equation of

$$p > 7000\text{MPa} \qquad \cdots \quad (9).$$

**10.** A method according to claim 2, wherein the determining step is configured to determine that the adiabatic shear bands have no potential for occurrence, provided that a contact between the rolling element and either the outer ring or the inner ring is maintained.

**11.** A program, of which data is stored in a memory and readable by a computer from the memory, for designing a rolling bearing provided with components including rolling elements, an outer ring, and an inner ring which come into contact with each other, the program enabling the computer to perform steps of:

determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and
estimating that brittle flaking resulting from the adiabatic shear bands have a potential for occurrence within the at least one of the components, when it is determined that the adiabatic shear bands have a potential for occurrence.

**12.** A program according to claim 11, wherein the determination step includes steps of:

determining whether or not at least one of a condition causing the high deformation rates and the unstable plastic phenomenon is satisfied,

wherein the condition causing the high deformation rates is defined by an equation of

$$\dot{\gamma} < 10^2/\text{sec} \qquad \cdots \quad (1'),$$

where $\dot{\gamma}$ a true shear strain rate of true shear strain to be caused within the at least one of the components during a plastic deformation thereof, and
the unstable plastic phenomenon is defined by an equation of

$$\gamma < \gamma_c \qquad \cdots \quad (2'),$$

where $\gamma$ is a true shear strain to be caused within the at least one component and $\gamma_c$ is a critical shear strain depending on a material characteristic of the at least one component, and
estimating that the adiabatic shear bands have no potential for occurrence, thus causing no brittle flaking, provided that the at least one of the conditions causing the high deformation rates and the unstable plastic phenomenon is satisfied.

**13.** A program according to claim 12, wherein the critical shear strain $\gamma_c$ is obtained by calculating, under an adiabatic condition, an equation of

$$\left.\frac{\partial \tau}{\partial \gamma}\right)_{T,\dot{\gamma}} + \left.\frac{\partial \tau}{\partial T}\right)_{\gamma,\dot{\gamma}}\frac{dT}{d\gamma} + \left.\frac{\partial \tau}{\partial \dot{\gamma}}\right)_{T,\gamma}\frac{d\dot{\gamma}}{d\gamma} = 0 \qquad \cdots \quad (3'),$$

where $\tau$ is flow stress, $\gamma$ is the true shear strain, $\dot{\gamma}$ is the true shear strain rate, and T is temperature, and assigning a resultant strain value calculated on the equation (3) to the critical shear strain $\gamma_c$.

**14.** A program according to claim 13, wherein the critical shear strain $\gamma_c$ provides a component material characteristic expressed by either an equation of

$$\gamma_c = -\frac{C_v n}{\left.\dfrac{\partial \tau}{\partial T}\right)_{\gamma,\dot{\gamma}}} \qquad\qquad \cdots \quad (4')$$

or an equation of

$$\gamma_c = -\frac{C_v}{\left.\dfrac{\partial \tau}{\partial T}\right)_{\gamma,\dot{\gamma}}} - \frac{Y'}{k} \qquad\qquad \cdots \quad (5') \; ,$$

where C is a volume specific heat, n is a work hardening exponent in parabolic hardening, Y' is a yield stress of shear, and k is a slope in linear hardening.

**15.** A program according to claim 13, wherein, on condition that the component material characteristic is expressed by an equation of

$$\tau = \left[A + B\gamma^{n'}\right]\left[1 + C'\ln\left(\frac{\dot{\gamma}}{\dot{\gamma}_0}\right)\right]\frac{T_M - T}{T_M - T_0} \qquad \cdots \quad (6') \; ,$$

the critical shear strain $\gamma_c$ is expressed by an equation of

$$\gamma_c = \frac{n'\rho C_P (T_M - T_0)}{0.9(A+B)} - \frac{A}{B}\gamma_c^{1-n'} \qquad\qquad \cdots \quad (7') \; ,$$

where A, B, C' and n' are constants, $T_M$ is a melting point, To is an ambient temperature, $\dot{\gamma}_0$ is a strain rate at the ambient temperature, $\rho$ is a mass density, and Cp is a specific heat.

**16.** A program according to claim 12, wherein the critical shear strain $\gamma_c$ is given as 0.08 serving as a threshold for determining whether or not the adiabatic shear bands have a potential for occurrence.

**17.** A program, of which data is stored in a memory and readable by a computer from the memory, for designing a bearing provided with a rolling contact, the program enabling the computer to perform steps of:

receiving information indicative of dimensions of the bearing, material characteristics of the bearing, and collision conditions of the rolling contact, the material characteristics including values relating to critical shear strain of materials of components composing the rolling contact;
computing physical values indicative of strain to be caused in the bearing using the received information;
making a comparison between the computed physical values and values indicative of the critical shear strain; and
estimating that an adiabatic shear deformation has a potential for occurrence in the bearing.

**18.** A program according to claim 17, wherein
the values relating to the critical shear strain and to be received are the critical shear strain $\gamma_c$ itself and a critical shear strain rate $\dot{\gamma}_c$,
the physical values to be computed are a true shear strain $\gamma$ and a true shear strain rate $\dot{\gamma}$,
the comparison is $\gamma > \gamma_c$ and $\dot{\gamma} > \dot{\gamma}_c$, and
the estimation is carried out so that, if $\gamma > \gamma_c$ and $\dot{\gamma} > \dot{\gamma}_c$ is established, it is estimated that the adiabatic shear deformation in the bearing has a potential for occurrence, while if $\gamma > \gamma_c$ and $\dot{\gamma} > \dot{\gamma}_c$ is not established, it is estimated that the adiabatic shear deformation occurring in the bearing has no potential for occurrence.

**19.** An apparatus for designing a rolling bearing provided with components including rolling elements, an outer ring, and an inner ring which come into contact with each other, comprising steps of:

determining means for determining whether or not adiabatic shear bands have a potential for occurrence within at least one of the components, due to the fact that stress is applied to the components, thus causing high deformation rates in the at least one of the components to cause an unstable plastic phenomenon that brings about an adiabatic shear deformation state within the at least one of the components; and
estimating means for estimating that brittle flaking resulting from the adiabatic shear bands have a potential for occurrence within the at least one of the components, when it is determined that the adiabatic shear bands have a potential for occurrence.

**20.** An apparatus according to claim 19, wherein the determination means includes:

determining means for determining whether or not at least one of a condition causing the high deformation rates and the unstable plastic phenomenon is satisfied,

wherein the condition causing the high deformation rates is defined by an equation of

$$\dot{\gamma} < 10^2/\text{sec} \qquad \cdots \ (1''),$$

where $\dot{\gamma}$ a true shear strain rate of true shear strain to be caused within the at least one of the components during a plastic deformation thereof and
the unstable plastic phenomenon is defined by an equation of

$$\gamma < \gamma_c \qquad \cdots \ (2''),$$

where $\gamma$ is a true shear strain to be caused within the at least one component and $\gamma_c$ is a critical shear strain depending on a material characteristic of the at least one component, and
estimating means for estimating that the adiabatic shear bands have no potential for occurrence, thus causing no brittle flaking, provided that the at least one of the condition causing the high deformation rates and the unstable plastic phenomenon is satisfied.

**21.** An apparatus according to claim 20, wherein the critical shear strain $\gamma_c$ is obtained by calculating, under an adiabatic condition, an equation of

$$\left.\frac{\partial \tau}{\partial \gamma}\right)_{T,\dot{\gamma}} + \left.\frac{\partial \tau}{\partial T}\right)_{\gamma,\dot{\gamma}} \frac{dT}{d\gamma} + \left.\frac{\partial \tau}{\partial \dot{\gamma}}\right)_{T,\gamma} \frac{d\dot{\gamma}}{d\gamma} = 0 \qquad \cdots \ (3''),$$

where $\tau$ is flow stress, $\gamma$ is the true shear strain, $\dot{\gamma}$ is the true shear strain rate, and T is temperature, and assigning a resultant strain value calculated on the equation (3) to the critical shear strain $\gamma_c$.

**22.** An apparatus according to claim 21, wherein the critical shear strain $\gamma_c$ provides a component material characteristic expressed by either an equation of

$$\gamma_c = -\frac{C_v n}{\left.\dfrac{\partial \tau}{\partial T}\right)_{\gamma,\dot{\gamma}}} \qquad \cdots \ (4'')$$

or an equation of

$$\gamma_c = -\frac{C_v}{\left.\dfrac{\partial \tau}{\partial T}\right)_{\gamma,\dot{\gamma}}} - \frac{Y'}{k} \qquad \cdots \quad (5''),$$

where $C_v$ is a volume specific heat, n is a work hardening exponent in parabolic hardening, Y' is a yield stress of shear, and k is a slope in linear hardening.

23. An apparatus according to claim 21, wherein, on condition that the component material characteristic is expressed by an equation of

$$\tau = \left[A + B\gamma^{n'}\right]\left[1 + C'\ln\left(\frac{\dot{\gamma}}{\dot{\gamma}_0}\right)\right]\frac{T_M - T}{T_M - T_0} \qquad \cdots \quad (6''),$$

the critical shear strain $\gamma_c$ is expressed by an equation of

$$\gamma_c = \frac{n'\rho C_P (T_M - T_0)}{0.9(A + B)} - \frac{A}{B}\gamma_c^{1-n'} \qquad \cdots \quad (7''),$$

where A, B, C' and n' are constants, $T_M$ is a melting point, $T_0$ is an ambient temperature, $\dot{\gamma}_0$ is a strain rate at the ambient temperature, $\rho$ is a mass density, and $C_p$ is a specific heat.

24. An apparatus according to claim 20, wherein the critical shear strain $\gamma_c$ is given as 0.08 serving as a threshold for determining whether or not the adiabatic shear bands have a potential for occurrence.

25. An apparatus according to claim 19, wherein the determining means is configured to determine that the adiabatic shear bands have no potential for occurrence, provided that a relative collision velocity v between the rolling element and the outer or inner ring in a radial direction of the rolling bearing is met by an equation of

$$v < 1\text{m/sec} \qquad \cdots \quad (8'').$$

26. An apparatus according to claim 19, wherein
the rolling bearing is incorporated in an alternator for combustion engines and contains a lubricant of which withstand pressure p is independent of both of viscosity of oil contained in grease and velocity, the lubricant including an additive such as an extreme pressure additive or solid lubricant, and
the determining means is configured to determine that the adiabatic shear bands have no potential for occurrence, provided that the withstand pressure p of the lubricant is met by an equation of

$$p > 7000\text{MPa} \qquad \cdots \quad (9'').$$

27. An apparatus according to claim 19, wherein the determining means is configured to determine that the adiabatic shear bands have no potential for occurrence, provided that a contact between the rolling element and either the outer ring or the inner ring is maintained.

OUTER RING

WEA, CRACK, FLAKING

PORTION A

**FIG. 1A**

CRACK

WHITE BANDS

**FIG. 1B**

**FIG. 1C**

FIG. 2A

**FIG. 2B**

WHITE BANDS

**FIG. 2C**

WHITE BANDS

**FIG. 2D**

**FIG. 3**

STRESSES CAUSED BY ENGINE VIBRATIONS, BELT TENSION, ETC.

⇩

METALLIC FRESH SURFACE FORMED ON ROLLER CONTACT AREA

STATIC ELECTRICITY OCCURRING BETWEEN PULLEY AND BELT ACCELERATES HYDROGEN GENERATION

**TRIBOCHEMICAL REACTION**

⇩

CATALYTIC ACTION ON METALLIC FRESH SURFACE

⇩

DECOMPOSITION OF GREASE
GENERATION OF HYDROGEN

⇩

INTRUSION OF HYDROGEN INTO STEEL

⇩

· HYDROGEN ENBRITTLEMENT (WHITE BANDS, CRACK GENERATION)

· WEAKENED BINDING IN STRUCTURE→WHITE-BAND GENERATION→ CRACK

⇩

FLAKING

BALL (+)

GREASE          H$^2$ GAS

SHIFT

REACTION FILM

DIFFUSION STABILIZED          ADSORPTION

OUTER RING (−)

CONCEPTUAL VIEW OF HYDROGEN INTRUSION

# FIG. 4

EP 1 686 500 A2

STRESSES WITH VIBRATIONS AND TENSION, ETC.

↓

LARGE LOAD, SLIP

↓

LARGE SHEAR STRESS

↓

INCREASE IN DISLOCATION DENSITY, INCREASE IN MICRO STRAIN

↓

AGGREGATION AND FIXATION OF CARBON, FIXATION OF DISLOCATION

↓

OCCURRENCE OF WHITE BANDS

↓

FLAKING

NONUNIFORMITY >UNIFORMITY

CONCEPTUAL VIEW OF DIFFUSION PHENOMENON OF SOLUTE ATOMS (CARBON)

· UNIFORMED DIFFUSION (DIFFUSION UNDER CONCENTRATION GRADIENT)
  SOLUTE ATOMS TEND TO BE HOMOGENIZED IN WHOLE BEARING

· NONUNIFORM DIFFUSION (DIFFUSION UNDER STRESS GRADIENT)
  SOLUTE ATOMS TEND TO GATHER AT DISLOCATION (HIGH STRESS AREA) AREA

$y/b$ DEPTH

8
6
4
2

WIDTH

2  4  6  8  10  $x/b$

FLOW OF SOLUTE ATOMS DUE TO INTERACTION WITH DISLOCATION

## FIG. 5

FLAKED PIECE

STARTING POINT

BEACH MARK

BALL BODY

**FIG. 6A**

起点部

ビーチマーク

STARTING POINT

BEACH MARK

**FIG. 6B**

EP 1 686 500 A2

**FIG. 6C**

WHITE BANDS

**FIG. 6D**

EP 1 686 500 A2

| | LOADING METHOD | | DYNAMIC PHENOMENON ON TESTS |
|---|---|---|---|

| STRAIN RATE (s⁻¹) | | | |
|---|---|---|---|
| $10^7$ | | | |
| $10^6$ | HYPER VELOCITY IMPACT | GAS GUN EXPLOSIVE PROJECTILE | PROPAGATION OF IMPACT WAVE |
| $10^5$ | | | |
| $10^4$ | /////// | | |
| $10^3$ | IMPACT | MECHANICAL IMPACT IMPACT DUE TO EXPLOSION | PROPAGATION OF ELASTIC AND PLASTIC WAVE |
| $10^2$ | | | |
| $10^1$ | /////// | | |
| | DYNAMIC | HYPER HYDRAULIC AND AIR PRESSURE MACHINE | RESONANCE BETWEEN TEST PIECE AND MACHINE |
| $10^0$ | | | |
| $10^{-1}$ | /////// | | |
| $10^{-2}$ | STATIC | HYDRAULIC SCREWING MECHANISM | TEST ON CONSTANT STRAIN RATE |
| $10^{-3}$ | | | |
| $10^{-4}$ | | | |
| $10^{-5}$ | /////// | | |
| $10^{-6}$ | CREEP | CONSTANT LOAD PRESSURIZING MECHANISM | RECORDING OF STRAIN VERSUS TIME (CREEP SPEED) |
| $10^{-7}$ | | | |
| $10^{-8}$ | | | |

INERTIAL FORCE BECOMES IMPORTANT

INERTIAL FORCE CAN BE NEGLECTED

**FIG. 7**

44

REGION I
YIELD (FLOW) STRESS IS IMPERVIOUS TO STRAIN RATE AND TEMPERATURES
PLASTIC DEFIOMATION IS CONTROLLED IN NON-THERMAL MECHANISM

REGION II
YIELD STRESS REMARKABLY VARIES ON STRAIN RATE AND TEMPERATURES
PLASTIC STRAIN RATE IS CONTROLLED IN THERMALLY ACTIVATED PROCESS IN TERMS OF DISLOCATION MOVEMENT

REGION III
YIELD STRESS IS EXTREMELY SENSITIVE TO STRAIN RATE
THERMALLY ACTIVATED PROCESS STILL REMAINS WITH INCREASE IN INFLUENCE OF VISCOSITY RESISTANCE

## FIG. 8

EP 1 686 500 A2

FIG. 9

**FIG. 10**

**FIG. 11**

× ADIABATIC SHEAR BAND IS PRESENT

○ ADIABATIC SHEAR BAND IS ABSENT

— THEORETICAL FORMULA $\gamma_c$

**FIG. 12**

$\dot{\gamma} = 10^2 / \sec$

$\dot{\gamma} = 10^4 / \sec$

─○─ SUJ2

── AISI 4340

**FIG. 13**

**FIG. 14**

**FIG. 15A**

**FIG. 15B**

**FIG. 16A**

**FIG. 16B**

EP 1 686 500 A2

LOAD
W

D

d

AVERAGE    PRESSURE
(MEYER HARDNESS)

$$p_m = \frac{4W}{\pi d^2}$$

MICRO VICKER'S HARDNESS  $\gamma$

## FIG. 17A

| | AVERAGE PRESSURE $p_m$(Kg/mm²) | SIZE OF DENT (d/D) | YIELD STRESS Y(Kg/mm²) | STRAIN $\varepsilon 3$ (CORRESPON DS TO Y) | RATIO $p_m$/Y | RATIO $\varepsilon 3$/(d/D) |
|---|---|---|---|---|---|---|
| COPPER | 27 | 0.27 | 10.5 | 0.05 | 2.6 | 0.19 |
| | 39 | 0.37 | 14 | 0.08 | 2.8 | 0.22 |
| | 44 | 0.5 | 16 | 0.09 | 2.8 | 0.18 |
| MEDIUM STEEL | 132 | 0.23 | 51 | 0.06 | 2.6 | 0.26 |
| | 159 | 0.49 | 57 | 0.09 | 2.8 | 0.18 |
| | 161 | 0.69 | 63 | 0.15 | 2.6 | 0.22 |
| | 190 | 0.84 | 70 | 0.2 | 2.7 | 0.24 |

* DUE TO DATA RESULTING ROM COMPRESSION TESTS, ABSOLUTE VALUE OF PRINCIPAL STRAIN$\varepsilon 3$ BECOMES MAXIMUM (WITH NEGATIVE VALUES OMITTED)

## FIG. 17B

**FIG. 17C**

| NAME OF METALS | (d/D) | SSHEAR STRAIN $\gamma_1$ | RATIO $\gamma_1$ (d/D) |
|---|---|---|---|
| COPPER | 0.27 | 0.08 | 0.28 |
| | 0.37 | 0.12 | 0.32 |
| | 0.5 | 0.14 | 0.27 |
| MEDIUM STEEL | 0.23 | 0.09 | 0.39 |
| | 0.49 | 0.14 | 0.28 |
| | 0.69 | 0.23 | 0.33 |
| | 0.84 | 0.3 | 0.36 |

**FIG. 17D**

**FIG. 18A**

**FIG. 18B**

**FIG. 19A**

**FIG. 19B**

**FIG. 20A**

**FIG. 20B**

**FIG. 21A**

**FIG. 21B**

**FIG. 22A**

**FIG. 22B**

Z-AXIS

$\tau$ 1

X-AXIS

$\mu$ =0.2

P max:  MAXIMUM CONTACT
SURFACE PRESSURE

$\tau$1:  PRINCIPAL SHEAR STRESS

$\tau$st:  MAXIMUM VALUE OF $\tau$1

2b

**FIG. 23**

EP 1 686 500 A2

**FIG. 23A**

**FIG. 23B**

$\tau_{st}/p_{max}=0.32$

$\tau_1/p_{max}$

◫ 0.30−0.35
Ⅲ 0.25−0.30
▨ 0.20−0.25
▓ 0.15−0.20
▦ 0.10−0.15
▨ 0.05−0.10
▩ 0.00−0.05

DEPTH z/b

WIDTH ×/b

**FIG. 23C**

$\tau_{st}/p_{max}=0.32$

$\tau_1/p_{max}$

◫ 0.30−0.35
Ⅲ 0.25−0.30
▨ 0.20−0.25
▓ 0.15−0.20
▦ 0.10−0.15
▨ 0.05−0.10
▩ 0.00−0.05

DEPTH z/b

WIDTH ×/b

**FIG. 23D**

$\varepsilon_\theta = 0$
$\varepsilon_r = 0.2$
$\gamma_{r\theta} = 0.2$

**FIG. 24A**

$\varepsilon_\theta = 0.3$
$\varepsilon_r = -0.3$
$\gamma_{r\theta} = 0.6$

**FIG. 24B**

**FIG. 25A**

**FIG. 25B**

**FIG. 26A**

**FIG. 26B**

CRACKING IN RADIAL DIRECTION

DENT

CENTRAL CRACKING

VOID AREA

CONICAL CRACKING

LATERAL CRACKING

**FIG. 27A**

0·5mm

**FIG. 27B**

VARIATION IN STRESS OF ENGINE OSCILATION, BELT TENSION, ETC.

↓

BALL ENTERS FREE STATUS FOR A MOMENT

↓

IMPACT OCCURS BETWEEN BALL AND INNER RING (OR OUTER RING)

↓

PLASTIC STRAIN $\gamma$ AND STRAIN RATE $\dot{\gamma}$ ARE CAUSED TO OCCUR

↓

PLASTIC STRAIN AND STRAIN RATE EXCEED CRITICAL STARTING
POINT OF ADIABATIC SHEAR DEFORMATION
CRITICAL SHEAR STRAIN $\gamma_c < \gamma$
CRITICAL STRAIN RATE $\dot{\gamma}_c < \dot{\gamma}$

INCREASE IN FRICTIONAL FORCE DUE TO DEFECTIVE LUBRICATION CAUSES ACCELERATED INCREASE IN STRAIN (SHORTAGE IN WITHSTAND PRESSURE OF EXTREME PRESSURE ADDITIVES)

↓

ADIABATIC SHEAR DEFORMATION IS CAUSED TO OCCUR
WEA, VOIDS, PLASTIC STRAIN, CRACKS, ETC.

↓

FLAKING

**FIG. 28**

FIG. 29A

FIG. 29B

BELT RESONANCE
(PRESENT IN VICINITY OF 3500rpm)

ALTERNATOR

MOTOR

BELT TENSION 60 Kg

PULLEY RATIO 3

( WITH BEARING LOAD OF 125 Kg
AND PRELIMINARY THRUST
PRESSURE OF 40Kg )

REVOLUTIONAL SPEED OF MOTOR

rpm

FREQUENCY: VALUE TWO TIMES THAT OF REVOLUTION

4500

3000

80rpm

60sec

TIME

**FIG. 30A**

INDENTATION TRACE

2.6mm

WIDTH OF RACEWAY

約 2.8mm

**FIG. 30B**

**FIG. 31**

S1

**INPUT OF DIMENSIONS (BALL DIAMETER, INNER-RING CARVETURE DIAMETER, INNER RING DIAMETER, ETC.)**

S2

**INPUT OF INPUT OF MATERIAL CHARACTERISTICS (CRITICAL SHEAR STRESS STRAIN $\dot{\gamma}_c$, CRITICAL SHEAR STAIN RATE $\gamma_c$, FLOW STRESS Y)**

S3

**INPUT OF IMPACT CONDITIONS (IMPACT VELOCITY Vo, ROLLING MEMBER MASS m)**

S4

**COMPUTATION OF STRAIN $\gamma$ AND STRAIN RATE $\dot{\gamma}$ (BASED ON EQS. (58), (59), ETC.)**

S5

**DETERMIATON FOR ADIABATIC SHEAR DEFORMATION ($\gamma > \gamma_c$ AND $\dot{\gamma} > \dot{\gamma}_c$ ?)**

yes

no

**THRERE IS NO POTENTIAL FOR OCCURENE OF ADIABATIC SHEAR BANDS**

**THERE IS A POTENTIAL FOR OCCURENE OF ADIABATIC SHEAR BANDS**

S6

**NORMAL**

S7

**BRITTLE FLAKING (WHITE-LAYER FLAKING)**

**FIG. 32**